# EUROPÄISCHE PATENTSCHRIFT

(11) **EP 3 484 308 B1**
(45) Veröffentlichungstag und Bekanntmachung des Hinweises auf die Patenterteilung: **15.01.2025**
(21) Anmeldenummer: 17740379.7
(22) Anmeldetag: 17.07.2017
(51) Int. Cl.: A21D 2/26, A21D 2/36, A21D 10/00, A23L 29/10, A23L 33/10, A23L 7/10, A23L 7/143, A23L 11/00, A23L 19/00, A23L 25/00, A23L 29/206, A23L 33/22, A21D 13/066, A23L 27/10, A23L 33/00, A23L 29/225, A23L 11/60, A23L 11/65

(54) **VERWENDUNG VON GLUTENARMEN MEHLZUSAMMENSETZUNGEN ZUR HERSTELLUNG VON NAHRUNGSMITTELBREI**
USE OF LOW-GLUTEN FLOUR COMPOSITIONS FOR PRODUCING FOODSTUFFS PORRIDGE
UTILISATION DE COMPOSITIONS À BASE DE FARINE PAUVRES EN GLUTEN POUR LA PRODUCTION DE PÂTES ALIMENTAIRES

(30) Priorität: 18.07.2016 DE 102016213089
(43) Veröffentlichungstag der Anmeldung: 22.05.2019
(73) Patentinhaber: Charrak, Samir, 66877 Ramstein-Miesenbach (DE); Charrak, Monika, 66877 Ramstein-Miesenbach (DE)
(72) Erfinder: Charrak, Samir, 66877 Ramstein-Miesenbach (DE); Charrak, Monika, 66877 Ramstein-Miesenbach (DE)
(74) Vertreter: Meissner Bolte Partnerschaft mbB
(86) Internationale Anmeldenummer: PCT/EP2017/067959
(87) Internationale Veröffentlichungsnummer: WO 2018/015322

(56) Entgegenhaltungen:
- EP-A1- 0 889 729
- EP-A1- 2 636 316
- WO-A1-2010/124922
- WO-A2-2011/039308
- WO-A2-2011/136885
- CA-A1- 2 466 300
- DE-A1- 102009 039 363
- DE-U1- 202016 100 718
- GB-A- 869 202
- US-A1- 2012 027 894
- US-B1- 6 827 965
- "Pharmakognosie - Phytopharmazie", 1 January 2006, SPRINGER-LEHRBUCH SER., article HÄNSEL R:: "Polysacchariddrogen/Schleimdrogen", XP055787739
- MUELLER K ET AL: "Functional properties and chemical composition of fractionated brown and yellow linseed meal (Linum usitatissimum L.)", JOURNAL OF FOOD ENGINEERING, BARKING, ESSEX, GB, vol. 98, no. 4, 1 June 2010 (2010-06-01), pages 453 - 460, XP026934594, ISSN: 0260-8774, [retrieved on 20100128], DOI: 10.1016/J.JFOODENG.2010.01.028
- GAMBUS H ET AL: "Quality of gluten-free supplemented cakes and biscuits", INTERNATIONAL JOURNAL OF FOOD SCIENCES AND NUTRI, CARFAX PUBLISHING LTD, GB, vol. 60, no. suppl. 4, 1 January 2009 (2009-01-01), pages 31 - 50, XP009127348, ISSN: 0963-7486, DOI: 10.1080/09637480802375523
- GANORKAR PRAVIN M ET AL: "Defatted flaxseed meal incorporated corn-rice flour blend based extruded product by response surface methodology", JOURNAL OF FOOD SCIENCE AND TECHNOLOGY, SPRINGER (INDIA) PRIVATE LTD, INDIA, vol. 53, no. 4, 23 December 2015 (2015-12-23), pages 1867 - 1877, XP035986397, ISSN: 0022-1155, [retrieved on 20151223], DOI: 10.1007/S13197-015-2134-3

## Beschreibung

Die vorliegende Erfindung betrifft die Verwendung von für Nahrungsmittel geeigneten, glutenarmen Mehlzusammensetzungen zur Herstellung von Nahrungsmittelbrei sowie die unter Verwendung dieser Zusammensetzung hergestellten Nahrungsmittelbreie.

Es gibt eine wachsende Anzahl an Krankheitsbildern, die durch eine gesundheitsschädigende Wirkung von Gluten auf den menschlichen Organismus hervorgerufen werden. Dabei unterscheidet man generell zwischen einer chronischen Darmentzündung in Form einer Autoimmunerkrankung (Zöliakie) und einer Glutensensitivität, die wiederum verschiedene Ausprägungen haben kann.

Bei Vorliegen einer Zöliakie führt der Verzehr von glutenhaltiger Nahrung zu einer schweren Immunreaktion mit Symptomen wie Gewichtsverlust, Durchfall, Erbrechen, Appetitlosigkeit, Müdigkeit und Depression. Es wird angenommen, dass ca. 1 % der Bevölkerung in der westlichen Welt unter Zöliakie leiden.

Andere Erkrankungen, bei denen Gluten negative Auswirkungen auf den Körper hat, werden unter dem Begriff Glutensensitivität zusammengefasst. Zu den zahlreichen bisher beobachteten Symptomen gehören unter anderem abdominale Beschwerden, wie Blähungen, Schmerzen im Bauchbereich und Durchfall, aber auch Kopfschmerzen, Migräne, Lethargie und Müdigkeit, Aufmerksamkeitsdefizitstörung und Hyperaktivität, Schizophrenie, Muskelbeschwerden sowie Knochen- und Gelenksschmerzen. Neuere Forschungen zeigen, dass der Gluten-Bestandteil Gliadin die Permeabilität der Dünndarmzellen erhöht und den Darm somit durchlässig für Nahrungsproteine macht. Des Weiteren wird angenommen, dass die Ausbildung einer Glutensensitivität durch häufigen Verzehr von glutenreichen Nahrungsmitteln begünstigt wird.

Es gibt also einen stetig wachsenden Anteil der Bevölkerung, der sich aus gesundheitlichen Gründen glutenfrei ernähren muss oder will. Für diesen Zweck wurden zahlreiche glutenfreie Produkte entwickelt. Laut EG Verordnung 41/2009 dürfen Lebensmittel als "glutenfrei" deklariert werden, die einen Glutengehalt von höchstens 20 mg/kg (20 ppm) aufweisen.

Bei der überwiegenden Anzahl glutenarmer und glutenfreier Produkte werden glutenreiche Mehle durch glutenarme Mehle wie etwa Maismehl, Kartoffelmehl, Süßkartoffelmehl, Buchweizenmehl, Amaranthmehl, Sojamehl, Hirsemehl, Quinoamehl, Teffmehl oder vergleichbare Mehle ersetzt. Nachteilig an den meisten glutenfreien Ersatzprodukten ist jedoch deren hoher Gehalt an verwertbaren Kohlenhydraten, welche sich negativ auf den Blutzuckerspiegel auswirken. Im Hinblick auf eine vielfach angestrebte kohlenhydratarme Ernährung ist jedoch ein vergleichsweise geringer Anteil an verstoffwechselbaren Kohlenhydraten wünschenswert. Die meisten glutenfreien Ersatzprodukte sind deshalb nicht für eine kohlenhydratarme Ernährung geeignet.

Diese Form der Ernährung ist zwar durchaus praktizierbar, jedoch wäre es wünschenswert, wenn die Auswahl an glutenfreien und gleichzeitig kohlenhydratarmen Nahrungsmitteln erweitert würde, um die Umstellung von einer herkömmlichen Ernährung zu erleichtern.

Insbesondere für Menschen mit einem empfindlichen Magen oder Darm wäre ein Ersatz für den beliebten Haferbrei bzw. Haferschleim wünschenswert. Quellstoffe im Hafer, wie beta-Glucane, haben eine reizlindernde und wohltuende Wirkung auf den Magen- und Darmtrakt. Bei Durchfallerkrankungen sorgt zudem das im Haferschleim gebundene Wasser für einen Ausgleich des Flüssigkeitshaushaltes. Hafer ist zwar glutenfrei, jedoch auch sehr stärkereich und somit für eine kohlenhydratarme Ernährung nicht geeignet. Außerdem wird Hafer zumeist gemeinsam mit glutenreichen Getreidesorten angebaut, so dass handelsüblicher Hafer Glutenkontaminationen enthält, die über dem Grenzwert für die Bezeichnung glutenfrei liegen.

Verschiedentlich werden im Handel glutenfreie Mehlzusammensetzungen zur Herstellung von Nahrungsmittelbrei, insbesondere für die Humanernährung, angeboten. Die überwiegende Anzahl dieser Breisorten basiert jedoch auf den vorgenannten, kohlenhydratreichen Mehlen wie Mehle von Buchweizen, Amaranth, Hirse, Quinoa oder Teff und/oder enthalten größere Mengen an Sojamehl, was den Geschmack des Breis stark beeinträchtigt. Zudem sind die organoleptischen Eigenschaften des Breis nicht immer gewährleistet. Insbesondere ist es häufig problematisch, einen angenehmen, dezenten, nicht aufdringlichen Geschmack des verzehrfertigen Breis zu erreichen und gleichzeitig eine angenehme breiartige Konsistenz zu erzielen. Häufig dicken Mehlzusammensetzungen zu stark an, so dass man pastöse, teigartige Massen mit einem unangenehmen Mundgefühl erhält. Andere Mehlzusammensetzungen dicken verzögert an oder der beim Einarbeiten erhaltene Brei ändert seine Konsistenz sehr rasch und dickt stark nach.

Bezüglich der zuvor erläuterten Aufgaben und Verbesserungsbedarfe gehören folgende Beispiele zum Stand der Technik.

GB869202A offenbart Futtermittelkonzentrate für Tiere, die Suspension und/oder Lösung von Zitronensäure und/oder ein oder mehrere ihrer sauren Salze in Wasser oder in einer wässrigen Flüssigkeit wie Milch in einer bestimmten Menge enthalten. Die Zugabe der Zitronensäure und/oder eines oder mehrerer ihrer sauren Salze zu den Futterkonzentraten soll vor allem bei Verdauung der jungen Säugetiere helfen und das Auftreten von Entwicklungsstörungen verhindern.

EP2636316A1 offenbart einen Müsliriegel und vergleichbare festen Produkte, die aus einem Basis von Cerealien und 20 bis 40 Gew.-% einer Leinsamenkomponente bestehen und einen Gehalt an alpha-Linolensäure von 4 bis 8 g pro 100g aufweisen. Ein zweiter Aspekt dieser Erfindung geht um ein Cerealien-Produkt in einer bestimmten Ausführungsform, wobei das Cerealien-Produkt einen Gesamtgehalt an alpha-Linolensäure von 1.0 bis 2.5 g pro 100 g aufweist. In einer bevorzugten Ausführungsform wird das Cerealien-Produkt in einer hermetisch verschlossenen Verpackung unter modifizierter Atmosphäre verpackt.Die in CA2466300A1 offenbarte Erfindung steht auf dem Gebiet der Ölsaatenraffination und Verarbeitung der Ölsaaten, insbesondere der Herstellung eines funktionellen Faser-Leinsamenmehlproduktes aus Leinsamen zur Verwendung in Lebensmitteln, Getränken und Nahrungsergänzungsmitteln für Menschen und Tiere. Die Erfindung umfasst ein funktionelles Faser-Leinsamenprodukt mit einem hohen Anteil an - löslichen und unlöslichen Ballaststoffen, Omega-3-Fettsäuren, Proteinen, Phytosterinen, Lignanen und Antioxidantien - und einem geringen Anteil an verdaulichen Kohlenhydraten, gesättigten und Transfetten; mit Eigenschaften, die zur Verbesserung der Misch-, Blatt-, Extrusions-, Back-, Brat- und Brateigenschaften von Nahrungs- und Genussmitteln sowie Tierfutterprodukten ohne nachteiliger Auswirkung auf die Schmackhaftigkeit oder die Eigenschaften des Aussehens; und mit einer beträchtlich verlängerten Haltbarkeit im Vergleich zu funktionellen Faserprodukten nach dem Stand der Technik. Die Erfindung umfasst auch ein Verfahren zur Herstellung des funktionellen Faser-Ölsaatenprodukts unter Verwendung von Hochdruck- und Hochtemperatur-Misch- und Extrusionsanlagen sowie Hochtemperatur-Lösungsmittelextraktion-Systemen.

DE202016100718U1 offenbart eine glutenarme Paniermehlzusammensetzung, welche zu wenigstens 90 Gew.-%, bezogen auf das Gesamtgewicht der Zusammensetzung, aus den folgenden Bestandteilen besteht: a). 10 bis 80 Gew.-%, bezogen auf das Gesamtgewicht der Zusammensetzung Kokosmehl als Bestandteil A, b). 20 bis 90 Gew.-%, bezogen auf das Gesamtgewicht der Zusammensetzung, wenigstens ein Mehl oder Schrot aus einer von Kokos verschiedenen Schalenfrucht oder Ölsaat als Bestandteil B, wobei der Bestandteil B einen Glutengehalt von maximal 0,1 Gew.-% und einen Proteingehalt von wenigstens 20 Gew.-% aufweist.

Der vorliegenden Erfindung liegt daher die Aufgabe zugrunde, glutenarme Mehlzusammensetzungen bereitzustellen, die sich in einfacher Weise zu einem organoleptisch vorteilhaften, verzehrfertigen Nahrungsmittelbrei mit geringem Gehalt an verstoffwechselbaren Kohlenhydraten verarbeiten lassen. Insbesondere sollte die Mehlzusammensetzung beim Einarbeiten in Wasser oder wässrige Flüssigkeiten in reproduzierbarer Weise eine dem Haferbrei vergleichbare breiige Konsistenz liefern und nicht zu einer unangenehm teigigen, pastösen Konsistenz andicken. Ferner sollte die Mehlzusammensetzung beim Einarbeiten in Wasser oder in wässrige Flüssigkeiten die Flüssigkeit vollständig aufnehmen können und sich nicht wieder trennen. Außerdem soll die Mehlzusammensetzung beim Herstellen des Breis, d.h. beim Einarbeiten in Wasser oder wässrige Getränke rasch quellen, so dass man rasch, vorzugsweise innerhalb von 2 bis 3 Minuten und in reproduzierbarer Weise einen verzehrfertigen Nahrungsmittelbrei erhält, der nicht oder nur schwach nachdickt.

Es wurde nun überraschenderweise gefunden, dass diese und weitere Aufgaben durch für Nahrungsmittel geeignete glutenarme Mehlzusammensetzungen gelöst werden, die zu wenigstens 80 Gew.-%, insbesondere wenigstens 90 Gew.-%, bezogen auf das Gesamtgewicht der Mehlzusammensetzung, aus den folgenden Bestandteilen A, B und gegebenenfalls C bestehen, wobei die Gesamtmenge der Bestandteile A und B wenigstens 50 Gew.-% und insbesondere wenigstens 60 Gew.-%, bezogen auf das Gesamtgewicht der Zusammensetzung, ausmacht:
a. wenigstens ein Mehl- oder Schrot-Bestandteil A, ausgewählt unter Mehl aus Goldleinsamen, Schrot aus Goldleinsamen, Mehl aus Chiasamen und Schrot aus Chiasamen, mit der Maßgabe, dass der Mehl- oder Schrotbestandteil A wenigstens 30 Gew.-%, insbesondere wenigstens 50 Gew.-% des Bestandteils A aus Mehl oder Schrot von Goldlein oder Chia mit einem Ölgehalt von weniger als 20 Gew.-% besteht;
b. wenigstens ein Mehl als Bestandteil B, der ausgewählt ist unter Mehlen von Schalenfrüchten, Mehlen einer von Goldlein und Chia verschiedenen Ölsaat von nicht-Leguminosen, Mehlen von Pseudogetreiden und Mehlen aus Samen von glutenfreien Süßgräsern, wobei der Bestandteil B einen Glutengehalt von maximal 0,1 Gew.-% aufweist;
c. gegebenenfalls ein oder mehrere grobteilige Nahrungsmittelbestandteile als Bestandteil C, die einen Glutengehalt von maximal 0,1 Gew.-% aufweisen.

Dementsprechend betrifft die vorliegende Erfindung die hier und im Folgenden beschriebenen, für Nahrungsmittel geeigneten glutenarmen, insbesondere glutenfreien Mehlzusammensetzungen zur Herstellung von verzehrfertigen Nahrungsmittelbreien.

Die vorliegende Erfindung betrifft weiterhin ein Verfahren zur Herstellung von verzehrfertigen Nahrungsmittelbreien, bei dem man wenigstens eine der hier und im Folgenden beschriebenen, für Nahrungsmittel geeignete glutenarme, insbesondere glutenfreie Mehlzusammensetzung mit einem Glutengehalt von maximal 0,1 Gew.-%, welche zu wenigstens 80 Gew.-%, bezogen auf das Gesamtgewicht der Mehlzusammensetzung, aus den folgenden Bestandteilen A, B und gegebenenfalls C besteht, wobei die Gesamtmenge der Bestandteile A und B wenigstens 50 Gew.-%, bezogen auf das Gesamtgewicht der Zusammensetzung, ausmacht,:
a. wenigstens ein Mehl- oder Schrot-Bestandteil A, ausgewählt unter Mehl aus Goldleinsamen, Schrot aus Goldleinsamen, Mehl aus Chiasamen, Schrot aus Chiasamen, mit der Maßgabe, dass der Mehl- oder Schrotbestandteil A wenigstens 30 Gew.-%, insbesondere wenigstens 50 Gew.-% des Bestandteils A aus Mehl oder Schrot von Goldlein oder Chia mit einem Ölgehalt von weniger als 20 Gew.-% besteht;
b. wenigstens ein Mehl als Bestandteil B, der ausgewählt ist unter Mehlen von Schalenfrüchten, Mehlen einer von Goldlein und Chia verschiedenen Ölsaat von nicht-Leguminosen, Mehlen von Pseudogetreiden und Mehlen aus Samen von glutenfreien Süßgräsern, wobei der Bestandteil B einen Glutengehalt von maximal 0,1 Gew.-% aufweist;
c. gegebenenfalls ein oder mehrere grobteilige Nahrungsmittelbestandteile als Bestandteil C, die einen Glutengehalt von maximal 0,1 Gew.-% aufweisen;
in Wasser oder ein wasserhaltiges Getränk einarbeitet.

Die Erfindung betrifft außerdem die nach dem hier und im Folgenden beschriebenen Verfahren erhältlichen verzehrfertigen Nahrungsmittelbreie, enthaltend eine Mehlzusammensetzung mit einem Glutengehalt von maximal 0,1 Gew.-%, welche zu wenigstens 80 Gew.-%, bezogen auf das Gesamtgewicht der Mehlzusammensetzung, aus den folgenden Bestandteilen A, B und gegebenenfalls C besteht, wobei die Gesamtmenge der Bestandteile A und B wenigstens 50 Gew.-%, bezogen auf das Gesamtgewicht der Zusammensetzung, ausmacht:a. wenigstens ein Mehl- oder Schrot-Bestandteil A, ausgewählt unter Mehl aus Goldleinsamen, Schrot aus Goldleinsamen, Mehl aus Chiasamen, Schrot aus Chiasamen, mit der Maßgabe, dass der Mehl- oder Schrotbestandteil A wenigstens 30 Gew.-%, insbesondere wenigstens 50 Gew.-% des Bestandteils A aus Mehl oder Schrot von Goldlein oder Chia mit einem Ölgehalt von weniger als 20 Gew.-% besteht;
b. wenigstens ein Mehl als Bestandteil B, der ausgewählt ist unter Mehlen von Schalenfrüchten, Mehlen einer von Goldlein und Chia verschiedenen Ölsaat von nicht-Leguminosen, Mehlen von Pseudogetreiden und Mehlen aus Samen von glutenfreien Süßgräsern, wobei der Bestandteil B einen Glutengehalt von maximal 0,1 Gew.-% aufweist;
c. gegebenenfalls ein oder mehrere grobteilige Nahrungsmittelbestandteile als Bestandteil C, die einen Glutengehalt von maximal 0,1 Gew.-% aufweisen;
und Wasser oder ein wasserhaltiges Getränk,
wobei die Menge an Mehlzusammensetzung und Wasser so gewählt wird, dass die Gesamtmenge der Bestandteile A und B im Bereich von 10 bis 150 g pro kg Wasser bzw. wässriges Getränk liegt;
sowie die Verwendung dieser Nahrungsmittelbreie zur Humanernährung. Die Erfindung wird durch die im Anhang sich befindenden Ansprüche definiert.

Die erfindungsgemäßen Mehlzusammensetzungen sind glutenarm und insbesondere glutenfrei und enthalten nur einen geringen Anteil an verwertbaren Kohlenhydraten. Der Anteil an verwertbaren Kohlenhydraten wird typischerweise 20 Gew.-%, insbesondere 15 Gew.-%, und speziell 10 Gew.-%, bezogen auf die Bestandteile der Mehlzusammensetzung nicht überschreiten und liegt typischerweise im Bereich von 0,5 bis 20 Gew.-%, insbesondere im Bereich von 2 bis 15 Gew.-%, oder im Bereich von 2 bis 10 Gew.-%, bezogen auf die Bestandteile der Mehlzusammensetzung. Dementsprechend sind die unter Verwendung der erfindungsgemäßen Mehlzusammensetzungen erhältlichen Nahrungsmittelbreie glutenarm oder glutenfrei und weisen einen geringen Gehalt an verwertbaren Kohlenhydraten auf. Zudem haben die unter Verwendung der erfindungsgemäßen Mehlzusammensetzungen erhältlichen Nahrungsmittelbreie vorteilhafte organoleptische Eigenschaften, insbesondere einen ansprechenden Geschmack und ein angenehmes Mundgefühl. Aufgrund des hohen Gehalts an Schleimpolysacchariden in dem Bestandteil A ist wie bei Hafer-basierten Nahrungsmittelbreien gewährleistet, dass die erfindungsgemäßen Nahrungsmittelbreie im Magen-Darm-Trakt eine reizlindernde Wirkung zeigen und als Quellungsrelaxans sowie als Antidiarrhoikum und ferner zur Behandlung von Irritationen des Magens und Darms eingesetzt werden können [siehe R. Hänsel, Pharmakognosie - Phytopharmazie, 6. Auflage, Springer-Verlag, Berlin Heidelberg, New York 1999, S. 370-372].

Überraschenderweise liefert die alleinige Verwendung des Bestandteils A, d. h. Goldleinmehl, teilentöltes Goldleinmehl, Chiamehl und/oder teilentöltes Chiamehl, keine geschmacklich ansprechenden Nahrungsmittelbreie, die als Ersatzprodukte für Haferbrei bzw. Haferschleim geeignet sind. Vielmehr führt der alleinige Einsatz dieser Bestandteile zu Nahrungsmittelbreien mit sehr einseitigem Geschmack und nicht zufriedenstellendem Mundgefühl. Erst durch Einsatz mindestens eines weiteren Bestandteils B, der aus einem glutenfreien und vorzugsweise kohlenhydratarmen Mehl besteht, können ansprechende Nahrungsmittelbreie erhalten werden. Auf diese Weise lässt sich das Mundgefühl stark verbessern und der Geschmack abrunden. Im Unterschied zur vorliegenden Erfindung führt die Verwendung von nicht entöltem Goldleinmehl nicht zu einem Brei, sondern zu einer Masse mit teigartiger, klebriger Konsistenz und unangenehmem Mundgefühl, die einen dominierenden Geschmack nach Lein aufweist. Der für die Herstellung von Brei verschiedentlich vorgeschlagene dunkle Lein ist ebenfalls nicht oder nur in geringerer Dosierung für die Herstellung von Breien mit einem angenehmen Mundgefühl geeignet, da entsprechende Mehlzusammensetzungen zu klebrigen teigartigen, teilweise inhomogenen Pasten führen, die teilweise stark nachdicken.

Unter glutenarmen Zusammensetzungen oder Zusammensetzungen mit geringem Glutengehalt werden im Rahmen dieser Erfindung Zusammensetzungen verstanden, die einen Glutengehalt von maximal 0,1 Gew.-% aufweisen. Die hier als glutenfrei bezeichneten Mehlzusammensetzungen weisen einen Glutengehalt von maximal 20 ppm auf.

Unter verwertbaren Kohlenhydraten versteht man im Unterschied zu Ballaststoffen alle Kohlenhydrate, die im menschlichen Organismus im Wesentlichen vollständig verstoffwechselt und zur Energiegewinnung genutzt werden.

Unter dem Begriff "Fettgehalt" versteht man den Gehalt an Triglyceriden eines Bestandteils.

Unter dem Begriff "für Nahrungsmittel geeignet" versteht man Substanzen, die, gegebenenfalls nach einem Verarbeitungsschritt wie Kochen oder Backen, grundsätzlich für den Verzehr durch den Menschen, d. h. für die Humanernährung, geeignet sind.

Unter dem Begriff "teilentölt" versteht man Mehle und Schrot von Ölsaaten, deren natürlicher Gehalt an Triglyceriden (Fette und Öle) verringert ist, z. B. in dem bei der Zerkleinerung der Samen die Fett- bzw. Öl-haltigen Bestandteile des Samens entfernt wurden oder der Fettgehalt in anderer Weise, z. B. durch Abpressen, verringert wurde.

Als nicht-leguminose Ölsaaten oder Ölsamen versteht man Ölsaaten, d. h. ölhaltige Samen, von Pflanzen, die nicht zur Familie der Hülsenfrüchtler zählen. Hierzu zählen vor allem Sonnenblumen, Lein, Sesam, Mohn insbesondere Blaumohn und Graumohn und Raps, aber auch Pinienkerne.

Der hier verwendete Begriff Goldlein bzw. Goldleinsamen bezeichnet im Unterschied zu "normalem" Leinsamen (auch brauner Leinsamen) einen Leinsamen von gelber Farbe (auch gelber Leinsamen genannt), der aufgrund eines geringeren Gehalts an Cyaniden einen milderen Geschmack aufweist. Goldlein zeichnet sich zudem durch einen im Vergleich zu dunklem Lein höheren Gehalt an Schleimpolysacchariden aus.

Als Schalenfrüchte, welche landläufig auch als "Nüsse" und "Kerne" bezeichnet werden, versteht man die Samenspeichergewebe von solchen Nutzpflanzen, die unter den Oberbegriff Samenobst fallen. Samenobst umfasst das Spektrum von Samen der nacktsamigen Nadelbäume bis hin zu Samen der bedecktsamigen Pflanzen mit verholztem und ungenießbarem Perikarp, die als Früchte geerntet werden (Lieberei, R., Reisdorff, C., Franke, W., Nutzpflanzenkunde, 7. Auflage 2007, Georg Thieme Verlag KG Stuttgart). Geeignete Schalenfrüchte im Sinne der Erfindung sind beispielsweise
- Steinfrüchte wie Mandeln, Kokosnüsse, Kerne von Aprikosen, Kerne von Mangos, Kerne von Granatäpfeln, Kerne von Pfirsichen, Kerne von Kürbissen, Kerne von Trauben, Kerne von Himbeeren, Kerne von Brombeeren, Avocadokerne, Pekanüsse und Pistazien,
- Nussfrüchte wie Walnüsse, Kastanien, Haselnüsse, Bucheckern, Eicheln, Hanfnüsse, Macadamianüsse, Steinnüsse und Wassernüsse, sowie ebenso morphologisch zu den Nüssen gehörende Mesokarpnüsse wie Erdnüsse.

Ebenfalls als Schalenfrüchte bezeichnet werden Cashewnüsse, Pinienkerne, Paranüsse, Pilinuss und Erdmandeln.

Die glutenarmen und glutenfreien Mehlzusammensetzungen der vorliegenden Erfindung enthalten als Bestandteil A Chiasamen und/oder Goldleinsamen in Form von Mehl oder Schrot oder Schrot/Mehl-Gemischen. Dabei hat es sich erfindungsgemäß als günstig erwiesen, wenn wenigstens 30 Gew.-%, vorzugsweise wenigstens 50 Gew.-% und insbesondere wenigstens 70 Gew.-% des Bestandteils A, bezogen auf sein Gesamtgewicht, aus teilentölten Mehlen bzw. Schrot von Chia- und/oder Goldleinsamen besteht. Diese teilentölten Produkte weisen typischerweise einen Gehalt an Triglyceriden von weniger als 25 Gew.-%, z. B. im Bereich von 5 bis < 25 Gew.-%, insbesondere im Bereich von 5 bis 20 Gew.-% auf.

Insbesondere wird der Bestandteil A so ausgewählt, dass er weniger als 25 Gew.-%, z. B. im Bereich von 5 bis < 25 Gew.-%, insbesondere im Bereich von 5 bis 20 Gew.-%, bezogen auf die Gesamtmenge des Bestandteils A, Triglyceride enthält. Dies kann beispielsweise dadurch realisiert werden, dass wenigstens 30 Gew.-%, insbesondere wenigstens 50 Gew.-% des Bestandteils A aus dem bei der Herstellung von Chiaöl aus Chiasamen anfallenden Presskuchen oder dem bei der Herstellung von Leinöl aus Goldleinsamen anfallenden Presskuchen oder einer Mischung davon besteht. Speziell bestehen wenigstens 80 Gew.-% des Bestandteils A aus dem bei der Herstellung von Chiaöl aus Chiasamen anfallenden Presskuchen oder dem bei der Herstellung von Leinöl aus Goldleinsamen anfallenden Presskuchen oder einer Mischung davon, oder derartige Presskuchen werden als alleiniger Bestandteil A eingesetzt. Es ist aber auch möglich, nicht-entölte Produkte, z. B. in Mischung mit den teilentölten Produkten, einzusetzen.

Der Bestandteil A ist dadurch charakterisiert, dass er einen hohen Gehalt an Schleimpolysacchariden aufweist. Schleimpolysaccharide sind Polysaccharide, die mit Wasser Hydrogele bilden und die daher als Hydrokolloide bezeichnet werden. Die wichtigste Eigenschaft der Schleimpolysaccharide ist die ausgeprägte Quellbarkeit und das Wasseraufnahmevermögen. Der Gehalt an Schleimpolysacchariden liegt typischerweise bei wenigstens 15 Gew.-%, insbesondere bei wenigstens 25 Gew.-%, z. B. im Bereich von 15 bis 50 Gew.-%, insbesondere im Bereich von 25 bis 40 Gew.-%, bezogen auf das Gesamtgewicht des Bestandteils A. Der Gehalt an Schleimpolysacchariden kann durch Bestimmung der Quellzahl, wie unten beschrieben, abgeschätzt werden.

Es hat sich als vorteilhaft erwiesen, wenn der Bestandteil A zu wenigstens 50 Gew.-%, insbesondere zu wenigstens 60 Gew.-% aus Mehlen und/oder Schrot von Goldleinsamen besteht. Insbesondere besteht der Bestandteil A zu wenigstens 50 Gew.-%, speziell zu wenigstens 60 Gew.-%, aus Mehlen und/oder Schrot von teilentöltem Goldleinsamen.

In einer bevorzugten Ausgestaltung der Erfindung besteht der Bestandteil A aus 50 bis 95 Gew.-%, insbesondere aus 60 bis 90 Gew.-% Mehl und/oder Schrot von Goldleinsamen und 5 bis 50 Gew.-%, insbesondere 10 bis 40 Gew.-% Mehl und/oder Schrot von Chiasamen. In dieser weiteren bevorzugten Ausführungsform sind vorzugsweise wenigstens 50 Gew.-%, insbesondere wenigstens 70 Gew.-% aus teilentölten Mehlen und/oder Schrot ausgewählt.

In einer weiteren bevorzugten Ausgestaltung der Erfindung besteht der Bestandteil A zu wenigstens 90 Gew.-%, insbesondere zu wenigstens 95 Gew.-% aus Mehlen und/oder Schrot von Goldleinsamen. Insbesondere besteht dann der Bestandteil A zu wenigstens 50 Gew.-%, speziell zu wenigstens 70 Gew.-% aus Mehlen und/oder Schrot von teilentöltem Goldleinsamen.

Der Anteil des Bestandteils A an den erfindungsgemäßen Mehlzusammensetzungen liegt vorzugsweise im Bereich von 10 bis 90 Gew.-%, insbesondere im Bereich von 15 bis 80 Gew.-%, besonders bevorzugt im Bereich von 20 bis 75 Gew.-% und speziell im Bereich von 30 bis 70 Gew.-%, bezogen auf das Gesamtgewicht der Mehlzusammensetzungen.

Die Partikelgröße des Bestandteils A, bestimmt durch Siebung, liegt typischerweise im Bereich von 0,05 bis 2,5 mm, insbesondere 0,05 bis 1 mm, d. h. wenigstens 90 Gew.-% der Partikel weisen eine Partikelgröße in diesen Bereichen auf. Vorzugsweise enthält der Bestandteil A zu wenigstens 50 Gew.-%, insbesondere zu wenigstens 70 Gew.-%, bezogen auf sein Gesamtgewicht, wenigstens ein Mehl mit einer Partikelgröße unterhalb 700 µm, insbesondere unterhalb 500 µm.

In einer bevorzugten Ausführungsform weist der Bestandteil A eine breite Partikelgrößenverteilung auf, wobei vorzugsweise wenigstens 50 Gew.-%, z. B. 50 bis 95 Gew.-% des Bestandteils A, Partikelgrößen unterhalb 500 µm und bis zu 50 Gew.-%, z. B. 5 bis 50 Gew.-%, Partikelgrößen im Bereich von 500 bis 2500 µm aufweisen. Auf diese Weise lässt sich ein besonders angenehmes Mundgefühl im fertigen Nahrungsmittelbrei erzielen.

Bei dem Bestandteil B handelt es sich insbesondere um Mehle aus einer Schalenfrucht und/oder um Mehle aus einer von Goldlein und Chia verschiedenen Ölsaat von nicht-Leguminosen. Bei den Mehlen kann es sich auch um teilentölte Mehle handeln, z. B. um Presskuchen, wie sie bei der Entölung der Schalenfrucht bzw. der Ölsaat anfällt.

Erfindungsgemäß ist der Bestandteil B glutenarm und hat einen Glutengehalt, bezogen auf das Gesamtgewicht des Bestandteils B von maximal 0,1 Gew.-%, insbesondere maximal 0,01 Gew.-% (100 ppm) und speziell maximal 20 ppm. Mit anderen Worten, der Bestandteil B basiert insbesondere auf Schalenfrüchten oder Ölsaaten oder Gemischen davon, die naturgemäß glutenarm und speziell glutenfrei sind und deren natürlicher Glutengehalt die hier genannten Grenzen nicht überschreitet. Zudem enthält der Bestandteil B keine oder keine nennenswerten glutenhaltigen Verunreinigungen, um die genannten Grenzwerte einzuhalten.

Als Bestandteil B kommen auch glutenfreie Pseudogetreide, wie Amaranth, Quinoa oder Buchweizen, sowie Samen von glutenfreien Süßgräsern, wie Hirse oder Teff, in Betracht. Aufgrund ihres vergleichsweise hohen Gehalts an verwertbaren Kohlenhydraten beträgt der Anteil derartiger Mehle in der Regel nicht mehr als 50 Gew.-%, bezogen auf die Gesamtmenge des Bestandteils B. Insbesondere besteht die erfindungsgemäße Zusammensetzung zu wenigstens 80 %, speziell zu wenigstens 90 %, bezogen auf das Gesamtgewicht der Komponente B, ausschließlich aus Mehlen von Schalenfrüchten oder Ölsaaten oder Gemischen davon.

Als erfindungsgemäßer Bestandteil B geeignete Mehle von Schalenfrüchten und nichtleguminöse Ölsaaten mit einem naturgemäß geringen Glutengehalt sind beispielsweise Mandelmehl, Kokosmehl, dunkles Leinmehl, Kürbiskernmehl, Sesammehl, Mohnmehl, Walnussmehl, Pekannussmehl, Haselnussmehl, Macadamianussmehl, Pistazienmehl, Paranussmehl, Traubenkernmehl, Cashewkernmehl, Granatapfelkernmehl, Himbeerkernmehl, Hanfmehl, Rapsmehl, Brombeerkernmehl, Avocadokernmehl, Pilinussmehl, Kastanienmehl, Pinienkernmehl, Aprikosenkernmehl, Erdmandelmehl, Leindottermehl, Mangokernmehl, Sonnenblumenmehl und deren Mischungen. Mehle dieser Schalenfrüchte bzw. Ölsaaten können alleine oder vorzugsweise als Gemisch von wenigstens zwei verschiedenen Schalenfrüchten und/oder Ölsaaten als Bestandteil B verwendet werden. Als erfindungsgemäßer Bestandteil B geeignete Mehle sind auch Amaranth, Quinoa, Hirse, Buchweizen und Teff, die vorzugsweise jedoch nicht alleine, sondern nur in Kombination mit einem oder mehreren der vorgenannten Mehle verwendet werden.

Vorzugsweise besteht der Bestandteil B zu wenigstens 50 Gew.-%, bezogen auf das Gesamtgewicht des Bestandteils B, aus einem der folgenden Mehle oder einem Gemisch dieser Mehl: Mandelmehl, Kokosmehl, Haselnussmehl, Walnussmehl, Pekannussmehl, Macadamianussmehl und Sonnenblumenmehl.

Bei den vorgenannten Mehlen des Bestandteils B kann es sich auch um Produkte handeln, aus denen der Ballaststoffanteil abgereichert und der Proteinanteil angereichert wurde. Im Falle von Hanfmehl kann es sich auch z. B. um Hanfprotein handeln. Hanfprotein ist ein Hanfmehl, aus dem der Ballaststoffanteil abgereichert und der Proteinanteil angereichert wurde. Vergleichbare Produkte sind auch für Mandeln bekannt.

Der Anteil des Bestandteils B an den erfindungsgemäßen Mehlzusammensetzungen liegt vorzugsweise im Bereich von 10 bis 90 Gew.-%, insbesondere im Bereich von 15 bis 80 Gew.-%, besonders bevorzugt im Bereich von 20 bis 75 Gew.-% und speziell im Bereich von 30 bis 70 Gew.-%, bezogen auf das Gesamtgewicht der Mehlzusammensetzungen.

Das Gewichtsverhältnis von Bestandteil A zu Bestandteil B in der erfindungsgemäßen Mehlzusammensetzung liegt in der Regel im Bereich von 1 : 9 bis 9 : 1, häufig im Bereich von 1 : 4 bis 4 : 1, insbesondere im Bereich von 1 : 3,5 bis 3,5 : 1 und speziell im Bereich von 3 : 7 bis 7 : 3.

Insbesondere besteht der Bestandteil B aus

| | |
|---|---|
| B1 | 50 bis 100 Gew.-% oder 50 bis 95 Gew.-%, insbesondere 60 - 100 Gew.-% oder 60 bis 95 Gew.-%, bezogen auf das Gesamtgewicht des Bestandteils B, aus einem der folgenden Mehle oder einem Gemisch dieser Mehle: Mandelmehl, Kokosmehl, Haselnussmehl, Walnussmehl, Pekannussmehl, Macadamianussmehl und Sonnenblumenmehl, |
| und | |
| B2 | gegebenenfalls 0 bis 50 Gew.-% oder 5 bis 50 Gew.-%, insbesondere 0 bis 40 Gew.-% oder 5 bis 40 Gew.-%, bezogen auf das Gesamtgewicht des Bestandteils B, einem der folgenden Mehle oder einem Gemisch dieser Mehle: dunkles Leinmehl, Kürbiskernmehl, Sesammehl, Mohnmehl, Pistazienmehl, Paranussmehl, Traubenkernmehl, Cashewkernmehl, Granatapfelkernmehl, Himbeerkernmehl, Hanfmehl, Rapsmehl, Brombeerkernmehl, Avocadokernmehl, Pilinussmehl, Kastanienmehl, Pinienkernmehl, Aprikosenkernmehl, Erdmandelmehl, Erdnussmehl, Leindottermehl und Mangokernmehl, |
| B3 | gegebenenfalls 0 bis 50 Gew.-% oder 5 bis 50 Gew.-%, insbesondere 0 bis 20 Gew.-% oder 0 bis 10 Gew.-%, bezogen auf das Gesamtgewicht des Bestandteils B, einem der folgenden Mehle oder einem Gemisch dieser Mehle: Amaranthmehl, Quinoamehl, Teffmehl, Buchweizenmehl und Hirsemehl. |

Beispiele für besonders bevorzugte Bestandteile B sind Mandelmehl, Kokosmehl, Haselnussmehl, Walnussmehl, Pekannussmehl, Macadamianussmehl, Mohnmehl und Sonnenblumenmehl sowie die folgenden Mehlmischungen: Kokosmehl + Mandelmehl, Kokosmehl + Haselnussmehl, Kokosmehl + Walnussmehl, Kokosmehl + Pekannussmehl, Kokosmehl + Macadamianussmehl, Kokosmehl + Sonnenblumenmehl, Kokosmehl + Erdnussmehl, Kokosmehl + Hanfmehl, Kokosmehl + Sesammehl, Kokosmehl + Pistazienmehl, Mandelmehl + Haselnussmehl, Mandelmehl + Walnussmehl, Mandelmehl + Pekannussmehl, Mandelmehl + Macadamianussmehl, Mandelmehl + Sonnenblumenmehl, Mandelmehl + Erdnussmehl, Mandelmehl + Hanfmehl, Mandelmehl + Sesammehl, Mandelmehl + Pistazienmehl, Mandelmehl + Mohnmehl, Kokosmehl + Mandelmehl + Haselnussmehl, Kokosmehl + Mandelmehl + Walnussmehl, Kokosmehl + Mandelmehl + Pekannussmehl, Kokosmehl + Mandelmehl + Macadamianussmehl, Kokosmehl + Mandelmehl + Sonnenblumenmehl, Kokosmehl + Mandelmehl + Erdnussmehl, Kokosmehl + Mandelmehl + Hanfmehl, Kokosmehl + Mandelmehl + Sesammehl, Kokosmehl + Mandelmehl + Pistazienmehl.

Die Partikelgröße des Bestandteils B, bestimmt durch Siebung, liegt typischerweise im Bereich von 0,05 bis 1 mm, insbesondere 0,05 bis 0,7 mm d. h. wenigstens 90 Gew.-% der Partikel weisen eine Partikelgröße in diesen Bereichen auf. Vorzugsweise enthält der Bestandteil B zu wenigstens 90 Gew.-%, bezogen auf sein Gesamtgewicht, wenigstens ein Mehl mit einer Partikelgröße unterhalb 700 µm, insbesondere unterhalb 500 µm.

Der Bestandteil B ist proteinreich und weist einen Proteingehalt von wenigstens 20 Gew.%, insbesondere wenigstens 25 Gew.-% und speziell wenigstens 30 Gew.-% auf. Naturgemäß ist der Proteingehalt des Bestandteils B abhängig von dem Proteingehalt der zur Gewinnung des Mehls verwendeten Schalenfrucht bzw. der Ölsaat, aber auch von der Aufbereitung des Mehls. Die Obergrenze des Proteingehalts kann bis 60 Gew.-% betragen und liegt vorteilhafterweise im Bereich von 25 bis 60 Gew.-% und insbesondere im Bereich von 25 bis 58 Gew.-% oder 30 bis 58 Gew.-%.

Die als Bestandteil B eingesetzten Schalenfrüchte und Ölsaaten haben häufig einen vergleichsweise hohen Fettgehalt. Im Hinblick auf den Einsatz zur Herstellung von Nahrungsmittelbrei kann man auch Mehle einsetzen, deren Öl- bzw. Fettgehalt, d. h. der Gehalt an Triglyceriden, durch teilweises Entölen verringert ist. Die unter B1 aufgeführten Mehle können sowohl in ihrer nicht entölten, vollfetten Form eingesetzt werden, wie auch in ihrer teilentölten Form. Die unter B2 aufgeführten Mehle werden häufig in teilentölter Form eingesetzt, können aber ebenfalls in ihrer vollfetten Form eingesetzt werden.

Hierbei hat es sich als vorteilhaft erwiesen, wenn der Bestandteil B zu wenigstens 50 Gew.-%, insbesondere zu wenigstens 70 Gew.-%, speziell zu wenigstens 90 Gew.-%, bezogen auf das Gesamtgewicht des Bestandteils B in der erfindungsgemäßen Zusammensetzung, aus einem oder mehreren Mehlen mit einem Fettgehalt von maximal 30 Gew.-%, insbesondere maximal 20 Gew.-%, bezogen auf die Trockenmasse des Mehls bzw. der Mehle, besteht. Bei den Mehlen mit geringem Fettgehalt kann es sich um teilentölte Mehle oder um Mehle mit einem naturgemäß geringen Fettgehalt handeln.

Unter dem Begriff Trockenmasse versteht man die Masse des Bestandteils, abzüglich des Wasseranteils. Die Trockenmasse kann in an sich bekannter Weise durch Trocknen bei 100°C bis zur Gewichtskonstanz bestimmt werden.

Die erfindungsgemäßen Mehlzusammensetzungen können ein oder mehrere grobteilige Nahrungsmittelbestandteile als Bestandteil C enthalten, die einen Glutengehalt von maximal 0,1 Gew.-%, insbesondere maximal 0,01 Gew.-% (100 ppm) und speziell maximal 20 ppm aufweisen. Diese Nahrungsmittelbestandteile sind von den vorgenannten Nahrungsmittelbestandteilen A und B verschieden, insbesondere hinsichtlich ihrer Partikelgröße. Sie verleihen den Nahrungsmittelbreien, welche aus diesen Mehlzusammensetzungen hergestellt werden, ein volleres Mundgefühl und bewirken einen sogenannten Crunch-Effekt.

Die Partikelgröße des Bestandteils C, bestimmt durch Siebung, liegt typischerweise oberhalb 1 mm, z. B. im Bereich von > 1 bis 20 mm, insbesondere > 1 bis 15 mm, d. h. wenigstens 90 Gew.-% der Partikel weisen eine Partikelgröße in diesen Bereichen auf.

Beispiele für grobteilige Nahrungsmittelbestandteile, die als Bestandteil C geeignet sind, umfassen beispielsweise ganze oder grob zerkleinerte Schalenfrüchte, wie Mandeln, z. B. in gehackter, gestiftelter oder gehobelter Form, Kokos, z. B. in gehackter, gestiftelter oder gehobelter Form, sonstige Nüsse, wie Walnuss, Haselnuss, Paranuss, Erdnuss, Cashew, z. B. in gehackter, gestiftelter oder gehobelter Form, Kakaosplitter, Sojaflocken, getrocknete Fruchtstücke, wie Apfelstücke, Birnenstücke, Mangostücke, Papayastücke, Beeren in ganzer oder zerkleinerter Form, z. B. Rosinen, Korinthen, Himbeere, Erdbeere, Waldbeere, Moosbeere (Cranberry), Gojibeere, getrocknete Gemüsestücke, wie Möhrenstücke, Selleriestücke, Zucchini stücke, Lauchstücke, Zwiebelstücke, Paprikastücke, Tomatenstücke, grob zerkleinerte Schokolade, grob zerkleinerte Gebäckstücke, ganze oder grob zerkleinerte Erdnüsse sowie ganze oder grob zerkleinerte Samen von Ölsaaten, wie brauner Leinsamen, Goldleinsamen, Sonnenblumenkerne, Mohnsamen, Kürbiskerne, Hanfsamen, Chiasamen, Pinienkerne und dergleichen.

Sofern enthalten, beträgt der Anteil des Bestandteils C in der Regel 5 bis 50 Gew.-%, insbesondere 10 bis 40 Gew.-%, speziell 15 bis 35 Gew.-%, bezogen auf das Gesamtgewicht der Mehlzusammensetzung.

In einer bevorzugten Ausgestaltung A der Erfindung besteht die Mehlzusammensetzung zu wenigstens 80 Gew.-%, insbesondere wenigstens 85 Gew.-% und speziell wenigstens 90 Gew.-%, bezogen auf das Gesamtgewicht der Mehlzusammensetzung, aus den folgenden Bestandteilen:
a. 10 bis 90 Gew.-%, insbesondere 20 bis 80 Gew.-%, speziell 70 bis 30 Gew.-%, bezogen auf das Gesamtgewicht der Mehlzusammensetzung, des Bestandteils A,
b. 10 bis 90 Gew.-%, insbesondere 20 bis 80 Gew.-%, speziell 70 bis 30 Gew.-%, bezogen auf das Gesamtgewicht der Mehlzusammensetzung, des Bestandteils B.

In dieser Ausgestaltung A enthält die Mehlzusammensetzung vorzugsweise weniger als 5 Gew.-% des Bestandteils C und im Wesentlichen keinen Bestandteil C oder weniger als 1 Gew.-%, jeweils bezogen auf das Gesamtgewicht der Mehlzusammensetzung.

In einer weiteren bevorzugten Ausgestaltung B der Erfindung besteht die Mehlzusammensetzung zu wenigstens 80 Gew.-%, insbesondere wenigstens 85 Gew.-% und speziell wenigstens 90 Gew.-%, bezogen auf das Gesamtgewicht der Mehlzusammensetzung, aus den folgenden Bestandteilen:
a. 10 bis 90 Gew.-%, insbesondere 20 bis 75 Gew.-%, speziell 30 bis 65 Gew.-%, bezogen auf das Gesamtgewicht der Mehlzusammensetzung, des Bestandteils A,
b. 10 bis 85 Gew.-%, insbesondere 20 bis 75 Gew.-%, speziell 30 bis 60 Gew.-%, bezogen auf das Gesamtgewicht der Mehlzusammensetzung, des Bestandteils B,
c. 5 bis 50 Gew.-%, insbesondere 10 bis 40 Gew.-%, speziell 15 bis 35 Gew.-%, bezogen auf das Gesamtgewicht der Mehlzusammensetzung, des Bestandteils C.

Neben den vorgenannten Bestandteilen A, B und gegebenenfalls C können die erfindungsgemäßen Mehlzusammensetzungen bis zu 20 Gew.-%, insbesondere jedoch nicht mehr als 15 Gew.-% oder nicht mehr als 10 Gew.-%, bezogen auf das Gesamtgewicht der Mehlzusammensetzung, einen oder mehrere für Nahrungsmittel geeignete Bestandteile enthalten, die von den vorgenannten Bestandteilen A, B und C verschieden sind.

Zu den weiteren Bestandteilen, im Folgenden auch Bestandteile D, zählen die in der folgenden Gruppe D1 genannten Nahrungsmittelbestandteile, nämlich Flohsamen und Flohsamenerzeugnisse, wie Flohsamenschalen. Sofern erwünscht, werden die in Gruppe D1 genannten Nahrungsmittelbestandteile in den Mehlzusammensetzungen typischerweise in einer Gesamtmenge von 0,1 bis 10 Gew.-%, bezogen auf das Gesamtgewicht der Mehlzusammensetzung, enthalten sein.

Zu den weiteren Bestandteilen D zählen auch die in der folgenden Gruppe D2 genannten Nahrungsmittelbestandteile:
- Aromabestandteile, beispielsweise natürliche oder naturidentische Aromastoffe, z. B. Gewürze in feinteiliger, getrockneter oder gefriergetrockneter Form, beispielsweise Muskat, Kerbel, Petersilie, Muskatblüte, Knoblauch, Pfeffer, Chili-Gewürz, Basilikum, Oregano, Curry, Zitronenschale, Sternanis, Kümmel, Bohnenkraut, Majoran, Zwiebeln, Vanille, Zimt, oder Fruchtpulver wie Orangenpulver, Erdbeerpulver, Himbeerpulver, Kirschpulver, Blaubeerpulver, Zitronenpulver, Cranberrypulver, Bananenpulver, Maracujapulver, Birnenpulver, Apfelpulver und Johannisbeerpulver;
- Süßungsmittel, z. B. Zuckeralkohole, wie Erythritol Xylit, Sorbit, Mannit, Lactit oder Isomalt, weiterhin Süßstoffe, wie Cyclamat, Saccharin, Stevia (Steviolglykoside), Sucralose, Aspartam, Inulin, Isomalooligosaccharide, Oligofruktosen und sonstige süß schmeckende Oligosaccharide;
- pulverförmige Proteinprodukte, z. B. Kollagenpulver, pulverförmiges Kollagenhydrolysat und Gelatinepulver;
- pulverförmige Fette, wie Kakaobutterpulver und Butterpulver;
- Milchprodukte, wie Milchpulver, Sahnepulver, Molkeproteinpulver, und Caseinpulver;
- pulverförmige Hühnereiprodukte, wie Volleipulver, Eigelbpulver und Eiklarpulver;
- für Nahrungsmittel geeignete Pflanzenfasern (Nahrungsfasern), beispielsweise Obst- und Gemüsefasern, wie Zitrusfasern, Bambusfasern, Kartoffelfasern, Orangenfasern, Apfelfasern und Erbsenfasern, aber auch für Nahrungsmittel zugelassene Cellulosefasern.

Sofern erwünscht, werden die in Gruppe D2 genannten Nahrungsmittelbestandteile in den Mehlzusammensetzungen typischerweise in einer Gesamtmenge von 0,1 bis 20 Gew.-%, insbesondere in einer Gesamtmenge von 0,5 bis 15 Gew.-%, bezogen auf das Gesamtgewicht der Mehlzusammensetzung, enthalten sein.

Zu den weiteren Bestandteilen D zählen auch die in der folgenden Gruppe D3 genannten Nahrungsmittelbestandteile:
- Vitamine, wie Vitamin C, Vitamin A und Vitamin D und Vitamin E, vorzugsweise in Pulverform;
- Mineralien, wie Kochsalz, für die Humanernährung geeignete Salze des Calciums, des Magnesiums und des Zinks, z. B. die Sulfate, Chloride, Gluconate, Lactate, Zitrate, Acetate, Fumarate, Valerate, Ascorbate, Glutarate, Cysteinate und Malate;
- Aminosäuren, wie Glutamin, Lysin, Leucin, Arginin und Isoleucin;
- Verdicker, wie Johannisbrotkernmehl, Guarkernmehl, Agar-Agar und Alginate;
- Säuerungsmitteln, wie Zitronensäure, Äpfelsäure und Gluconsäure;
- Konservierungsmitteln, wie Ascorbinsäure.

Sofern erwünscht, werden die in Gruppe D3 genannten Nahrungsmittelbestandteile in den Mehlzusammensetzungen typischerweise in einer Gesamtmenge von 0,1 bis 5 Gew.-%, insbesondere in einer Gesamtmenge von 0,5 bis 15 Gew.-%, bezogen auf das Gesamtgewicht der Mehlzusammensetzung, enthalten sein.

Neben den vorgenannten Bestandteilen A, B und gegebenenfalls C und/oder D enthalten die erfindungsgemäßen Mehlzusammensetzungen in der Regel keine oder nicht mehr als 10 Gew.-%, insbesondere nicht mehr als 5 Gew.-%, und speziell nicht mehr als 1 Gew.-%, bezogen auf das Gesamtgewicht der Mehlzusammensetzung, Bestandteile, die von den vorgenannten Bestandteilen A, B, C und D verschieden sind.

Die Bestandteile der Mehlzusammensetzungen werden in der Regel so zusammengestellt, dass die Kombination der Bestandteile A und B in der Mehlzusammensetzung für sich gesehen eine Quellzahl, bestimmt nach PhEur bei 22 °C, im Bereich von 3 bis 30 ml/g aufweist. Die Quellzahl kann der Fachmann durch Routineexperimente ermitteln. Gegebenenfalls wird man zur Orientierung zuvor die Quellzahl der Bestandteile A und B isoliert bestimmen und dann die Bestandteile A und B so kombinieren, dass die Kombination die gewünschte Quellzahl im Bereich von 3 bis 30 ml/g aufweist.

Zur Bestimmung der Quellzahl werden entweder 0,5 g oder 1 g der zu bestimmenden Substanz in 1 ml Ethanol vorgelöst bzw. suspendiert. Die Mischung wird in einen 25-ml-Messzylinder mit 0,5-ml-Teilung und PE-Stopfen gegeben. Nach Zugabe von 25 ml Wasser wird der Zylinder kräftig geschüttelt. Innerhalb der ersten Stunde nach Ansetzen der Mischung wird alle 10 Minuten erneut kräftig geschüttelt. Nach 3 Stunden wird das erreichte Quellvolumen abgelesen. Der Versuch wird 5 x wiederholt und der Mittelwert gebildet. Die Messung wird bei Umgebungstemperatur durchgeführt (22°C).

Hierbei ist zu berücksichtigen, dass die Quellzahl der Bestandteile A und B in der Regel mit zunehmender Partikelgröße des Bestandteils abnimmt. So ist die Quellzahl des Goldleinmehls, ebenso wie die Quellzahl des Chiamehls, umgekehrt proportional zum Mahlgrad des Mehls und damit zu seiner Partikelgröße. Bei dem teilentölten Goldleinmehl wurden z. B. Quellzahlen zwischen 22 bis 52 ml/g gemessen, wobei der niedrigste Wert bei einer Korngröße von über 0,8 mm und der höchste Wert bei einer Korngröße von 0,1 bis 0,5 mm gemessen wurde. Zur Formulierung eines wohlschmeckenden Breis oder Schleims auf Basis von teilentöltem Goldleinmehl und/oder teilentöltem Chiamehl kommen sowohl gröber vermahlene Produkte wie Schrot (1 bis 2,5 mm Korngröße) als auch sehr fein vermahlene Mehle (0,05 bis 0,5 mm Korngröße) in Frage.

Die erfindungsgemäßen Mehlzusammensetzungen enthalten vorzugsweise weniger als 15 Gew.-% Sojaerzeugnisse, bezogen auf die Gesamtmenge der Trockenbestandteile der erfindungsgemäßen Zusammensetzung.

Die erfindungsgemäßen Mehlzusammensetzungen enthalten vorzugsweise weniger als 20 Gew.-% Zuckeralkohole, wie Erythritol Xylit, Sorbit, Mannit, Lactit oder Isomalt.

Die erfindungsgemäßen Mehlzusammensetzungen enthalten vorzugsweise weniger als 20 Gew.-% Inulin.

Aufgrund ihrer Bestandteile sind die erfindungsgemäßen Mehlzusammensetzungen kohlenhydratarm und enthalten vorzugsweise maximal oder weniger als 20 Gew.-%, insbesondere maximal oder weniger als 15 Gew.-% verwertbare, d. h. vom menschlichen Organismus verstoffwechselbare Kohlenhydrate. Der Gehalt an Kohlenhydraten ergibt sich dabei durch die Kombination von Art und Menge der Bestandteile A, B und gegebenenfalls C und/oder D.

Aufgrund ihrer Bestandteile sind die erfindungsgemäßen Mehlzusammensetzungen vorzugsweise auch fettarm und enthalten nicht mehr als 35 Gew.-% Fett, insbesondere maximal 30 Gew.-%, speziell maximal 25 Gew.-% Fett, bezogen auf das Gesamtgewicht der Mehlzusammensetzung. Der Fettgehalt ergibt sich dabei durch die Kombination von Art und Menge der Bestandteile A, B und gegebenenfalls C und/oder D.

Vorzugsweise sind die Bestandteile der erfindungsgemäßen Mehlzusammensetzungen so gewählt, dass folgendes Nährstoffprofil resultiert:
≤ 20 Gew.-%, z. B. 0,5 bis 20 Gew.-%, insbesondere 1 bis 15 Gew.-%, oder 2 bis 10 Gew.%, bezogen auf die Bestandteile der Mehlzusammensetzung, verwertbare Kohlenhydrate,
< 35 Gew.-%, insbesondere maximal 30 Gew.-%, speziell maximal 25 Gew.-% Fett, z. B. 1 bis < 35 Gew.-%, insbesondere 1 bis 25 Gew.-% Fett, speziell 2 bis 20 Gew.-% Fett,
1 bis 50 Gew.-% Eiweiß,
wobei alle hier angegebenen %-Angaben auf die Trockenmasse der Mehlzusammensetzung bezogen sind. Bezüglich des Breis ergibt sich typischerweise folgendes Nährstoffprofil:
   ≤ 10 Gew.-%, z. B. 0,1 bis 10 Gew.-%, insbesondere 0,2 bis 7 Gew.-%, oder 0,4 bis 5 Gew.-%, bezogen auf die Bestandteile der Mehlzusammensetzung, verwertbare Kohlenhydrate,
   < 15 Gew.-%, insbesondere maximal 12 Gew.-%, speziell maximal 10 Gew.-% Fett z. B. 0,1 bis < 15 Gew.-%, insbesondere 0,1 bis 12 Gew.-%, speziell 1 bis 10 Gew.-% Fett,
   0,5 bis 25 Gew.-% Eiweiß,
   wobei alle hier angegebenen %-Angaben auf den Brei bezogen sind.

Die erfindungsgemäßen Mehlzusammensetzungen können in üblicher Weise zu einem Brei verarbeitet werden. Hierzu wird man in an sich bekannter Weise eine erfindungsgemäße Mehlzusammensetzung in Wasser oder in ein wasserhaltiges Getränk, beispielsweise einen verdünnten Fruchtsaft, wie verdünnten Apfelsaft, Nussmilch, Mandelmilch, Kokosmilch oder Kuhmilch, einarbeiten. Der Wasseranteil in dem wässrigen Getränk liegt in der Regel bei wenigstens 85 Gew.-%, bezogen auf das Getränk. Vorzugsweise enthält das wasserhaltige Getränk keine oder nur geringen Mengen an verstoffwechselbaren Kohlenhydraten, insbesondere weniger als 10 g/100ml, insbesondere maximal 7 g/100ml, speziell maximal 5 g/100ml. Das Einarbeiten wird häufig bei Umgebungstemperatur erfolgen. Gegebenenfalls kann man aber auch den Brei während des Einarbeitens erhitzen und/oder vor dem Verzehr erwärmen.

Da vor allem die Bestandteile A und B das Quellverhalten der erfindungsgemäßen Mehlzusammensetzung bestimmen wird man die Menge an Mehlzusammensetzung und Wasser so wählen, dass die Gesamtmenge der Bestandteile A und B im Bereich von 10 bis 150 g pro kg Wasser bzw. wässriges Getränk, häufig im Bereich von 20 bis 120 g pro kg Wasser bzw. wässriges Getränk insbesondere im Bereich von 20 bis 100 g pro kg Wasser bzw. wässriges Getränk liegt.

Die folgenden Beispiele dienen der Erläuterung der Erfindung:

### Quellzahlbestimmung:

Methode 1 (PhEur): 1 g der zu bestimmenden Substanz in 1 ml Ethanol vorgelöst bzw. suspendiert. Die Mischung wird in einen 25-ml-Messzylinder mit 0,5-ml-Teilung und PE-Stopfen gegeben. Nach Zugabe von 25 ml Wasser wird der Zylinder kräftig geschüttelt. Innerhalb der ersten Stunde nach Ansetzen der Mischung wird alle 10 Minuten erneut kräftig geschüttelt. Nach 3 Stunden wird das erreichte Quellvolumen abgelesen. Der Versuch wird 5 x wiederholt und der Mittelwert gebildet. Die Messung wird bei Umgebungstemperatur durchgeführt (22 °C).

Methode 2 (PhEur mod.): Modifizierung von Methode 1 zur besseren Reproduzierbarkeit: Anstelle von 1 g werden 0,5 g der zu bestimmenden Substanz eingesetzt. Ansonsten wird die Methode analog zu Methode 1 durchgeführt.

### Einsatzstoffe:

A1: Goldleinmehl (teilentölt): Korngröße 0,1-1,5 mm
A2: Gemahlener Goldleinsamen (vollfett): Korngröße 0,1-1 mm
A3: Chiamehl (teilentölt): Korngröße 0,1-1 mm
A4: Gemahlener Chiasamen (vollfett): Korngröße 0,1-1 mm
VA1: Leinmehl (dunkel, teilentölt): Korngröße 0,1-0,6 mm
VA2: Haferflocken fein, Partikelgröße 2-4 mm
VA3: Leinmehl (dunkel, vollfett): Korngröße 0,2-2 mm
B1: Kokosmehl (teilentölt), Korngröße 0,1-1 mm
B2: Mandelmehl (vollfett), Korngröße 0,1-1,5 mm
B3: Walnussmehl (teilentölt), Korngröße 0,1-1 mm
B4: Sesammehl (teilentölt), Korngröße 0,1-1 mm
B5: Erdnussmehl (teilentölt), Korngröße 0,1-1 mm
B6: Pistazienmehl (teilentölt), Korngröße 0,1-1 mm
B7: Macadamianussmehl (teilentölt), Korngröße 0,1-1 mm
B8: Hanfmehl, Korngröße 0,1-1 mm
B9: Haselnussmehl (vollfett), Korngröße 0,1-2 mm
B10: Gemahlener Blaumohn (Dampfmohn) (vollfett), Korngröße 0,1-1 mm
C1: Kokosraspeln (Partikelgröße 1-4 mm)
C2: Hanfsamen (ganz)
D1: Flohsamenschalenpulver (40-100 mesh)
D2: Zitrusfaser (40-150 mesh)
D3: Ascorbinsäure

**Tabelle 1: Nährstoffprofil und Quellzahlen von Goldleinmehl (A1), gemahlener Goldleinsamen (A2), dunklem Leinmehl (VA1),HaferΣlocken (VA2), Chiamehl (A3), gemahlener Chiasamen (A4).**

| | A1 | A2 | VA1 | VA2 | A3 | A4 |
|---|---|---|---|---|---|---|
| Quellzahl (ml/g) | 37 | 7,5 | 18 | 4,5 | 54 | 38 |
| Brennwert (kcal/100 g) | 333 | 471 | 352 | 349 | 328 | 450 |
| Fett (%/100 g) | 10 | 30,9 | 13 | 7,1 | 9,5 | 31,6 |
| Kohlenhydrate (%/100 g) | < 0,1 | < 0,1 | < 0,1 | 55,7 | 0,6 | 0,8 |
| Ballaststoffe (%/100 g) | 48,8 | 38,6 | 43,9 | 9,7 | 58,3 | 32,3 |
| Eiweiß (%/100 g) | 36,4 | 28,8 | 36,8 | 10,7 | 31,4 | 22,9 |

Durch Vermischen der folgenden Komponenten wurden die in den Tabellen 2a und 2b angegebenen erfindungsgemäßen Mehlzusammensetzungen 1 bis 18 hergestellt. Alle Angaben in den Tabellen 2a und 2b sind in Gew.-%, bezogen auf 100 Gew.-% der angegebenen Bestandteile. Zusätzlich wurden alle Zusammensetzungen mit 0,7 Gew.-% Speisesalz und 0,3 Gew.-% Ascorbinsäure versetzt (nicht angegeben).

**Tabelle 2a:**

| Zusammensetzung | 1 | 2 | 3 | 4 | 5 | 6 | 7 | 8 |
|---|---|---|---|---|---|---|---|---|
| A1 Goldleinmehl teilentölt | 46,5 | 37,7 | 30 | 20 | - | 30 | 54,5 | 45,5 |
| A3 Chiamehl teilentölt | - | - | - | 20 | 30 | 10 | - | - |
| B1 Kokosmehl (teilentölt) | 46,5 | 37,7 | 28 | - | 50 | 20 | - | 27,3 |
| B2 Mandelmehl (vollfett) | 7,0 | 5,7 | 20 | 40 | - | - | - | - |
| B3 Walnussmehl (teilentölt) | - | 18,9 | - | - | - | - | - | - |
| B4 Sesammehl (teilentölt) | - | - | - | - | 15 | - | - | - |
| B5 Erdnussmehl (teilentölt) | - | - | 20 | - | - | - | - | - |
| B6 Pistazienmehl (teilentölt) | - | - | - | 20 | - | - | - | - |
| B7 Macadamianussmehl (teilentölt) | - | - | - | - | - | 20 | - | - |
| B8 Hanfmehl | - | - | - | - | - | 20 | - | - |
| B9 Haselnussmehl (vollfett) | - | - | - | - | - | - | 36,4 | - |
| C1 Kokosraspeln | - | - | - | - | - | - | - | 27,3 |
| D1 Flohsamenschalenpulver | - | - | 2 | - | 5 | - | - | - |
| D2 Zitrusfaser | - | - | - | - | - | - | 9,1 | - |

**Tabelle 2b:**

| | 9 | 10 | 11 | 12 | 13* | 14 | 15* | 16* | 17* | 18* |
|---|---|---|---|---|---|---|---|---|---|---|
| A1 | 50 | 63,6 | 36,6 | - | - | 23,3 | - | - | - | - |
| A2 | - | - | - | - | - | 23,3 | - | - | 46,5 | - |
| A3 | - | - | - | 50 | - | - | - | - | - | - |
| A4 | - | - | - | - | 50 | - | - | - | - | - |
| VA1 | - | - | - | - | - | - | - | 46,5 | - | - |
| VA3 | - | - | - | - | - | - | 50 | - | - | 30 |
| B1 | - | - | - | 50 | 50 | 46,5 | 50 | 46,5 | 46,5 | - |
| B2 | 16,7 | 36,4 | - | - | - | 7,0 | - | 7,0 | 7,0 | 40 |
| B10 | 33,3 | - | 44,4 | - | - | - | - | - | - | - |
| C1 | - | - | - | - | - | - | - | - | - | 20 |
| C2 | - | - | - | - | - | - | - | - | - | 10 |
| D2 | - | - | 19 | - | - | - | - | - | - | - |

| | | | | | | | | | | |
|---|---|---|---|---|---|---|---|---|---|---|
| * Vergleichsbeispiele | | | | | | | | | | |

Die Nährstoffprofile der Zusammensetzungen 1 - 18 sind in den folgenden Tabellen 3 und 3b angegeben. Alle Angaben beziehen sich auf 100 g Trockenmischung

**Tabelle 3a**

| Zusammensetzung | 1 | 2 | 3 | 4 | 5 | 6 | 7 | 8 | 9 |
|---|---|---|---|---|---|---|---|---|---|
| Kcal | 377,4 | 375,1 | 406,2 | 454,4 | 347,7 | 360,5 | 442,4 | 454,4 | 432,7 |
| Fett [g] | 16,7 | 16,2 | 20,3 | 28,3 | 13,0 | 14,9 | 28,5 | 29,1 | 28,1 |
| Kohlenhydrate [g] | 8,7 | 8,9 | 7,9 | 3,6 | 10,1 | 7,1 | 1,5 | 6,7 | 2,1 |
| Zucker [g] | 8,7 | 8,0 | 7,8 | 2,7 | 9,5 | 6,4 | 1,0 | 6,6 | 0,7 |
| Ballaststoffe [g] | 41,4 | 35,5 | 32,3 | 30,0 | 43,7 | 40,4 | 39,0 | 35,4 | 34,0 |
| Eiweiß [g] | 27,3 | 30,7 | 30,6 | 31,5 | 27,6 | 29,5 | 25,5 | 23,9 | 29,8 |

**Tabelle 3b**

| Zusammensetzung | 10 | 11 | 12 | 13* | 14 | 15* | 16* | 17* | 18* |
|---|---|---|---|---|---|---|---|---|---|
| Kcal | 438,5 | 376,2 | 356,5 | 417,5 | 409,5 | 428,0 | 386,3 | 441,6 | 599,5 |
| Fett [g] | 26,0 | 22,4 | 13,7 | 24,8 | 21,6 | 24,4 | 18,1 | 26,5 | 50,8 |
| Kohlenhydrate [g] | 1,5 | 1,9 | 9,1 | 10,2 | 8,7 | 9,1 | 8,7 | 8,7 | 3,0 |
| Zucker [g] | 1,5 | 0,0 | 9,5 | 9,3 | 8,7 | 9,1 | 8,7 | 8,7 | 3,0 |
| Ballaststoffe [g] | 37,1 | 44,1 | 48,1 | 35,1 | 39,1 | 38,2 | 39,2 | 36,7 | 20,7 |
| Eiweiß [g] | 31,2 | 24,8 | 25,2 | 21 | 25,5 | 23,9 | 27,5 | 23,8 | 22,0 |

| | | | | | | | | | |
|---|---|---|---|---|---|---|---|---|---|
| * Vergleichsbeispiele | | | | | | | | | |

Eine Haferflockenzusammensetzung weist das folgende Nährstoffprofil auf:
Brennwert: 349 kcal/100g, 10,7 g/100 g Protein, 55,7 g/100 g verwertbare Kohlenhydrate, 9,7 g/100 g Ballaststoffe, 7,1 g/100 g Fett.

**Tabelle 4: Quellzahlen**

| | Zusammensetzung 1 | Haferflocken fein | Gesiebte Haferflocken |
|---|---|---|---|
| Quellzahl (ml/g) nach PhEur | 13,5 | 5 | 6 |

Aus Tabelle 4 ist ersichtlich, dass die Mehlzusammensetzung 1 zwar eine höhere Quellzahl als Haferflocken aufweist, die aber noch deutlich unterhalb der für reines, teilentöltes Goldleinmehl liegt, welches eine Quellzahl von 37 ml/g aufweist. Somit lässt sich durch Zusatz des nur schwach quellenden glutenfreien Mehls der Komponente B die Mehlzusammensetzung hinsichtlich ihrer Quellzahl und ihres Geschmacks an Haferbrei anpassen. Außerdem ermöglicht die etwas höhere Quellzahl, die Einsatzmenge des Mehls zur Herstellung eines Nahrungsmittelbreis mit einem dem Haferbrei ähnlichen organoleptischen Profil zu verringern. Diese Eigenschaft ist insbesondere für eine kalorienreduzierte Diät von Interesse. In den Tabellen 5a und 5b sind die Quellzahlen der Zusammensetzungen 2 - 18 angegeben, die in der gleichen Größenordnung der Zusammensetzung 1 liegen:

**Tabelle 5a:**

| Zusammensetzung | 2 | 3 | 4 | 5 | 6 | 7 | 8 | 9 | 10 |
|---|---|---|---|---|---|---|---|---|---|
| Quellzahl (ml/g) nach PhEur | 12,5 | 23,0 | 16,5 | 19,5 | 12,0 | 16,5 | 9,5 | 12,0 | 12,5 |

**Tabelle 5b:**

| Zusammensetzung | 11 | 12 | 13* | 14 | 15* | 16* | 17* | 18* |
|---|---|---|---|---|---|---|---|---|
| Quellzahl (ml/g) nach PhEur | 19,0 | 17.5 | 15,0 | 9,6 | 7,9 | 11,0 | 8,4 | 3,5 |

| | | | | | | | | |
|---|---|---|---|---|---|---|---|---|
| * Vergleichsbeispiele | | | | | | | | |

### Herstellung einer Breizubereitung:

40 g Zusammensetzung 1 wurden in 500 ml kaltem Wasser verrührt und unter Rühren einmal kurz aufgekocht. Nach dem Abkühlen ist der Brei verzehrfertig.

In analoger Weise wurde aus 80 g Haferflocken (fein) ein Haferbrei hergestellt.

In analoger Weise wurde aus 40 g gesiebten Haferflocken (Maschenweite 0,5 mm) ein Haferschleim hergestellt. Die Nährwertprofile und die organoleptischen Eigenschaften der erhaltenen Breizubereitungen sind in der folgenden Tabelle 6 zusammengestellt.

**Tabelle 6:**

| | Breizubereitung auf Basis der Zusammensetzung 1 | Haferbrei | Haferschleim |
|---|---|---|---|
| Brennwert (kcal/100g) | 28 | 48 | 24 |
| Fett (g/100 g) | 1,2 | 1,0 | 0,5 |
| Kohlenhydrate (g/100 g) | 0,6 | 7,7 | 3,9 |
| Ballaststoffe (%/100 g) (g/100 g) | 3,1 | 1,3 | 0,65 |
| Eiweiß (g/100 g) | 2,0 | 1,5 | 0,75 |
| Geschmack | Mild, unaufdringlich, angenehm, leicht nussig | Arttypisch, getreidig, mild | Arttypisch, getreidig, mild |
| | Breizubereitung auf Basis der Zusammensetzung 1 | Haferbrei | Haferschleim |
| Mundgefühl | Angenehm, weich, nicht zu schleimig, leichte Inhomogenitäten sorgen für eine breiige Konsistenz | Angenehm, breiig | Weich, schleimig, leicht unangenehm |

Wie in Tabelle 6 ersichtlich, bewirkt die gezielte Formulierung des Bestandteils A in Kombination mit mindestens einem glutenfreien Mehl gemäß Bestandteil B eine Mehlzusammensetzung, aus der sich schnell und einfach ein Ersatzprodukt für Haferschleim und Haferbrei zubereiten lässt, welches die positiven organoleptischen Eigenschaften von Haferbrei aufweist und, ähnlich dem Haferschleim, trotzdem keine harten, schleimhautreizenden Bestandteile enthält. Die erfindungsgemäßen Zusammensetzungen vereinen somit die Vorteile von Haferbrei und Haferschleim. Gleichzeitig ist die erhaltene Breizubereitung glutenarm, vorzugsweise glutenfrei und hat im Vergleich zu Haferbrei nur einen Bruchteil des Kohlenhydratgehalts (0,6 % vs. 7,7 %). Darüber hinaus weist die Breizubereitung aus der erfindungsgemäßen Zusammensetzung einen deutlich höheren Eiweißgehalt auf als das Produkt aus Haferflocken. Dies ist insbesondere bei der Anwendung als Schonkost vorteilhaft, da bei Magenbeschwerden generell nur sehr wenig gegessen werden kann, so dass es schnell zu einem Eiweißmangel kommen kann. Diesem wirkt die erfindungsgemäße Zusammensetzung entgegen. Die Breizubereitung aus der erfindungsgemäßen Zusammensetzung enthält außerdem einen deutlich höheren Ballaststoffgehalt, welcher zu einer erhöhten Sättigung beiträgt, ohne gleichzeitig mehr Kalorien zu liefern. Dies ist vorteilhaft für die Verwendung des Breis im Rahmen einer energiereduzierten Ernährung zur Gewichtsreduktion.

Aus den Zusammensetzungen 2 bis 18 wurde analog der für die Zusammensetzung 1 angegebenen Art und Weise jeweils ein verzehrfertiger Brei hergestellt und von zwei geschulten Personen hinsichtlich ihrer organoleptischen Eigenschaften (Geschmack, Mundgefühlt, Konsistenz) bewerten. Die jeweils eingesetzte Menge der Zusammensetzung pro kg Wasser, die organoleptischen Eigenschaften und der Nährwert von 250 g Brei (1 Portion) sind in der Tabelle 7 angegeben.

**Tabelle 7:**

| | | | | | | |
|---|---|---|---|---|---|---|
| Zusammensetzung | 2 | 3 | 4 | 5 | 6 | 7 |
| Geschmack ¹⁾ | G2 | G3 | G4 | G4 | G4 | G5 |
| Mundgefühl ²⁾ | M1 | M1 | M1 | M1 | M1 | M1 |
| Konsistenz ³⁾ | K1 | K1 | K1 | K1 | K1 | K1 |
| Freie Flüssigkeit | nein | nein | nein | nein | nein | nein |
| Nachquellung ⁴⁾ | minimal | minimal | minimal | minimal | minimal | minimal |
| Einsatzmenge [g/kg] | 80 | 70 | 95 | 80 | 100 | 95 |

**Fortsetzung Tabelle 7:**

| | | | | | | |
|---|---|---|---|---|---|---|
| Zusammensetzung | 8 | 9 | 10 | 11 | 12 | 13⁵⁾ |
| Geschmack¹⁾ | G6 | G7 | G1 | G7 | G4 | G8 |
| Mundgefühl ²⁾ | M2 | M1 | M1 | M1 | M1 | M4 |
| Konsistenz ³⁾ | K2 | K1 | K1 | K1 | K1 | K3 |
| Freie Flüssigkeit | nein | nein | nein | nein | nein | ja |
| Nachquellung ⁴⁾ | minimal | minimal | minimal | minimal | minimal | stark |
| Einsatzmenge [g/kg] | 105 | 105 | 90 | 95 | 80 | 140 |

**Fortsetzung Tabelle 7:**

| | | | | | |
|---|---|---|---|---|---|
| Zusammensetzung | 14 | 15⁵⁾ | 16⁵⁾ | 17⁵⁾ | 18⁵⁾ |
| Geschmack¹⁾ | G1 | G9 | G9 | G10 | G11 |
| Mundgefühl ²⁾ | M3 | M5 | M5 | M5 | M5 |
| Zusammensetzung | 14 | 15⁵⁾ | 16⁵⁾ | 17⁵⁾ | 18⁵⁾ |
| Konsistenz ³⁾ | K1 | K4 | K5 | K6 | K7 |
| Freie Flüssigkeit | Nein | ja | ja | ja | ja |
| Nachquellung ⁴⁾ | schwach | stark | stark | stark | Sehr stark |
| Einsatzmenge [g/kg] | 100 | 160 | 80 | 80 | 400 |

| | | | | | |
|---|---|---|---|---|---|
| 1) G1: mild, unaufdringlich, angenehm, leicht nussig G2: mild-nussig, leichte aromatische Walnussnote G3: nussig-aromatisch, dezente Erdnussnote G4: mild-nussig, leicht würzig, angenehm G5: nussig-aromatisch, dezente Haselnussnote G6: mild, unaufdringlich, angenehm, leicht nussig, dezente Kokosnote G7: nussig-aromatisch, dezente Mohnnote G8: nussig-würzig, starke Chia-Note G9: sehr bitter G10: nussig aromatisch, relativ starker Geschmack nach Goldleinmehl, leicht bitter G11: nussig-würzig, starker Eigengeschmack nach Leinsamen 2) M1: angenehm weich, nicht zu schleimig, breiig M2: angenehm weich, nicht zu schleimig, breiig, leicht stückig M3: angenehm weich, nicht zu schleimig, breiig, etwas dicker als M1 aber nicht pastös M4: pastöse Masse, teigig M5: klebrig, unangenehm 3) K1: Zusammenhängende Breistruktur K2: Zusammenhängende Breistruktur mit kleinen Stücken K3: inhomogene, partiell zusammenhängende Teigstruktur K4: teigartige Paste, K5: feste teigartige Paste, K6: teigartige, weiche Paste K7: Quellung setzt verzögert ein, dann starkes Andicken zu inhomogenen Paste 4) Nachquellen nach dem Aufkochen 5) Vergleichsbeispiel | | | | | |

Die Daten in Tabelle 7 zeigen, dass sich die erfindungsgemäßen Mehlzusammensetzungen zu einem homogenen Brei mit angenehmem, nussartigen aber dezenten Geschmack und einem breitypischen Mundgefühl verarbeiten lassen. Demgegenüber liefern nicht erfindungsgemäße Mehlzusammensetzungen keine geschmacklich akzeptablen Breie, sei es, dass der Geschmack einer Komponente zu stark dominiert, die Breimasse inhomogen ist, extrem stark andickt oder dass große Mengen an Mehlzusammensetzung erforderlich sind, um eine breiähnliche Konsistenz zu erreichen.

## Patentansprüche

1. Verwendung einer für Nahrungsmittel geeigneten glutenarmen Mehlzusammensetzung mit einem Glutengehalt von maximal 0,1 Gew.-%, welche zu wenigstens 80 Gew.-%, bezogen auf das Gesamtgewicht der Mehlzusammensetzung, aus den folgenden Bestandteilen A, B und gegebenenfalls C besteht, wobei die Gesamtmenge der Bestandteile A und B wenigstens 50 Gew.-%, bezogen auf das Gesamtgewicht der Zusammensetzung, ausmacht:
a. wenigstens ein Mehl- oder Schrot-Bestandteil A, ausgewählt unter Mehl aus Goldleinsamen, Schrot aus Goldleinsamen, Mehl aus Chiasamen, Schrot aus Chiasamen, mit der Maßgabe, dass der Mehl- oder Schrotbestandteil A wenigstens 30 Gew.-%, insbesondere wenigstens 50 Gew.-% des Bestandteils A aus Mehl oder Schrot von Goldlein oder Chia mit einem Ölgehalt von weniger als 20 Gew.-% besteht;
b. wenigstens ein Mehl als Bestandteil B, der ausgewählt ist unter Mehlen von Schalenfrüchten, Mehlen einer von Goldlein und Chia verschiedenen Ölsaat von nicht-Leguminosen, Mehlen von Pseudogetreiden und Mehlen aus Samen von glutenfreien Süßgräsern, wobei der Bestandteil B einen Glutengehalt von maximal 0,1 Gew.-% aufweist;
c. gegebenenfalls ein oder mehrere grobteilige Nahrungsmittelbestandteile als Bestandteil C, die einen Glutengehalt von maximal 0,1 Gew.-% aufweisen;
zur Herstellung von verzehrfertigem Nahrungsmittelbrei.

2. Verwendung gemäß Anspruch 1, wobei der Bestandteil A zu wenigstens 30 Gew.-%, bezogen auf das Gesamtgewicht des Bestandteils A, insbesondere zu wenigstens 50 Gew.-%, bezogen auf das Gesamtgewicht des Bestandteils A, aus dem bei der Herstellung von Chiaöl aus Chiasamen anfallenden Presskuchen oder dem bei der Herstellung von Leinöl aus Goldleinsamen anfallenden Presskuchen oder einer Mischung davon besteht.

3. Verwendung gemäß einem der vorhergehenden Ansprüche, wobei der Bestandteil A zu wenigstens 50 Gew.-%, bezogen auf das Gesamtgewicht des Bestandteils A, aus Mehl aus Goldleinsamen besteht.

4. Verwendung gemäß einem der vorhergehenden Ansprüche, wobei der Bestandteil A einen Fettgehalt von weniger als 25 Gew.-% und einen Schleimpolysaccharid-Gehalt von mehr als 25 Gew.-% aufweist.

5. Verwendung gemäß einem der vorhergehenden Ansprüche, wobei der Bestandteil B ausgewählt ist unter Mandelmehl, Kokosmehl, dunklem Leinmehl, Kürbiskernmehl, Sesammehl, Mohnmehl, Walnussmehl, Pekannussmehl, Haselnussmehl, Macadamianussmehl, Pistazienmehl, Paranussmehl, Traubenkernmehl, Erdnussmehl, Cashewkernmehl, Granatapfelkernmehl, Himbeerkernmehl, Hanfmehl, Rapsmehl, Brombeerkernmehl, Avocadokernmehl, Pilinussmehl, Kastanienmehl, Pinienkernmehl, Aprikosenkernmehl, Erdmandelmehl, Leindottermehl, Mangokernmehl, Sonnenblumenmehl und deren Mischungen sowie Mischungen, die bis zu 50 Gew.-%, bezogen auf den Bestandteil B eines oder mehrerer der folgenden Mehle enthalten: Quinoamehl, Amaranthmehl, Buchweizenmehl, Teff oder Hirse.

6. Verwendung gemäß Anspruch 5, wobei der Bestandteil B zu wenigstens 50 Gew.-%, bezogen auf das Gesamtgewicht der Komponente B aus wenigstens einem der folgenden Mehle besteht: Mandelmehl, Kokosmehl, Haselnussmehl, Walnussmehl, Pekannussmehl, Macadamianussmehl und Sonnenblumenmehl.

7. Verwendung gemäß einem der vorhergehenden Ansprüche, wobei der Bestandteil B zu wenigstens 50 Gew.-%, bezogen auf das Gesamtgewicht der Komponente B aus einem oder mehreren Mehlen mit einem Fettgehalt von maximal 30 Gew.-%, bezogen auf die Trockenmasse des Mehls, besteht.

8. Verwendung gemäß einem der vorhergehenden Ansprüche, wobei das Gewichtsverhältnis von Bestandteil A zu Bestandteil B in der Mehlzusammensetzung im Bereich von 1 : 9 bis 9 : 1 liegt.

9. Verwendung gemäß einem der vorhergehenden Ansprüche, wobei der Bestandteil C ausgewählt ist unter ganzen oder grob zerkleinerten Schalenfrüchten, Sojaflocken, getrockneten Fruchtstücken, getrockneten Gemüsestücken, grob zerkleinerter Schokolade, grob zerkleinerten Gebäckstücken, ganzen oder grob zerkleinerten Erdnüssen, sowie ganzen oder grob zerkleinerten Samen von nicht-leguminosen Ölsaaten.

10. Verwendung gemäß einem der vorhergehenden Ansprüche, wobei die Kombination der Bestandteile A und B der Mehlzusammensetzung als solche eine Quellzahl, bestimmt nach PhEur bei 22 °C im Bereich von 3 bis 30 ml/g aufweist.

11. Verwendung gemäß einem der vorhergehenden Ansprüche, wobei die Kombination der Bestandteile A, B und C so ausgewählt ist, dass die Mehlzusammensetzung nicht mehr als 35 Gew.-% Fett, bezogen auf das Gesamtgewicht der Mehlzusammensetzung, enthält.

12. Verwendung gemäß einem der vorhergehenden Ansprüche, wobei die Kombination der Bestandteile A, B und C so ausgewählt ist, dass die Mehlzusammensetzung nicht mehr als 20 Gew.-% verwertbare Kohlenhydrate, bezogen auf das Gesamtgewicht der Mehlzusammensetzung, enthält.

13. Verfahren zur Herstellung eines verzehrfertigen Nahrungsmittelbreis, umfassend die Einarbeitung einer Mehlzusammensetzung mit einem Glutengehalt von maximal 0,1 Gew.-%, welche zu wenigstens 80 Gew.-%, bezogen auf das Gesamtgewicht der Mehlzusammensetzung, aus den folgenden Bestandteilen A, B und gegebenenfalls C besteht, wobei die Gesamtmenge der Bestandteile A und B wenigstens 50 Gew.-%, bezogen auf das Gesamtgewicht der Zusammensetzung, ausmacht:
a. wenigstens ein Mehl- oder Schrot-Bestandteil A, ausgewählt unter Mehl aus Goldleinsamen, Schrot aus Goldleinsamen, Mehl aus Chiasamen, Schrot aus Chiasamen, mit der Maßgabe, dass der Mehl- oder Schrotbestandteil A wenigstens 30 Gew.-%, insbesondere wenigstens 50 Gew.-% des Bestandteils A aus Mehl oder Schrot von Goldlein oder Chia mit einem Ölgehalt von weniger als 20 Gew.-% besteht;
b. wenigstens ein Mehl als Bestandteil B, der ausgewählt ist unter Mehlen von Schalenfrüchten, Mehlen einer von Goldlein und Chia verschiedenen Ölsaat von nicht-Leguminosen, Mehlen von Pseudogetreiden und Mehlen aus Samen von glutenfreien Süßgräsern, wobei der Bestandteil B einen Glutengehalt von maximal 0,1 Gew.-% aufweist;
c. gegebenenfalls ein oder mehrere grobteilige Nahrungsmittelbestandteile als Bestandteil C, die einen Glutengehalt von maximal 0,1 Gew.-% aufweisen;
in Wasser oder in ein wasserhaltiges Getränk.

14. Verfahren nach Anspruch 13, wobei man die Zusammensetzung in einer Menge von 10 bis 150 g je kg Wasser oder wasserhaltiges Getränk einarbeitet.

15. Verzehrfertiger Nahrungsmittelbrei, erhältlich durch ein Verfahren nach Anspruch 13 oder 14, enthaltend
eine Mehlzusammensetzung mit einem Glutengehalt von maximal 0,1 Gew.-%, welche zu wenigstens 80 Gew.-%, bezogen auf das Gesamtgewicht der Mehlzusammensetzung, aus den folgenden Bestandteilen A, B und gegebenenfalls C besteht, wobei die Gesamtmenge der Bestandteile A und B wenigstens 50 Gew.-%, bezogen auf das Gesamtgewicht der Zusammensetzung, ausmacht:
a. wenigstens ein Mehl- oder Schrot-Bestandteil A, ausgewählt unter Mehl aus Goldleinsamen, Schrot aus Goldleinsamen, Mehl aus Chiasamen, Schrot aus Chiasamen, mit der Maßgabe, dass der Mehl- oder Schrotbestandteil A wenigstens 30 Gew.-%, insbesondere wenigstens 50 Gew.-% des Bestandteils A aus Mehl oder Schrot von Goldlein oder Chia mit einem Ölgehalt von weniger als 20 Gew.-% besteht;
b. wenigstens ein Mehl als Bestandteil B, der ausgewählt ist unter Mehlen von Schalenfrüchten, Mehlen einer von Goldlein und Chia verschiedenen Ölsaat von nicht-Leguminosen, Mehlen von Pseudogetreiden und Mehlen aus Samen von glutenfreien Süßgräsern, wobei der Bestandteil B einen Glutengehalt von maximal 0,1 Gew.-% aufweist;
c. gegebenenfalls ein oder mehrere grobteilige Nahrungsmittelbestandteile als Bestandteil C, die einen Glutengehalt von maximal 0,1 Gew.-% aufweisen;
und Wasser oder ein wasserhaltiges Getränk,
wobei die Menge an Mehlzusammensetzung und Wasser so gewählt wird, dass die Gesamtmenge der Bestandteile A und B im Bereich von 10 bis 150 g pro kg Wasser bzw. wässriges Getränk liegt.

16. Verwendung eines Nahrungsmittelbreis nach Anspruch 15 für die Humanernährung.

## Claims

1. Use of a low-gluten flour composition which is suitable for foodstuffs, has a gluten content of at most 0.1% by weight and consists to an extent of at least 80% by weight, based on the total weight of the flour composition, of the following ingredients A, B and optionally C, wherein the total amount of ingredients A and B amounts to at least 50% by weight, based on the total weight of the composition:
a. at least one flour or meal ingredient A, selected from golden flaxseed flour, golden flaxseed meal, chia seed flour, chia seed meal, with the proviso that the flour or meal ingredient A consists of at least 30% by weight, in particular at least 50% by weight, of ingredient A of flour or meal from golden flax or chia with an oil content of less than 20% by weight;
b. at least one flour as ingredient B, which is selected from flours from nuts, flours of an oilseed of non-legumes that is different from golden flax and chia, flours from pseudograins and flours made from seeds of gluten-free grasses, wherein ingredient B has a gluten content of at most 0.1% by weight;
c. optionally one or more coarse foodstuff ingredients as ingredient C, which have a gluten content of at most 0.1% by weight;
for the production of ready-to-eat foodstuff porridge.

2. Use according to Claim 1, wherein ingredient A consists to an extent of at least 30% by weight, based on the total weight of ingredient A, in particular to an extent of at least 50% by weight, based on the total weight of ingredient A, of the press cake obtained in the production of chia oil from chia seeds or the press cake obtained in the production of flaxseed oil from golden flaxseeds, or a mixture thereof.

3. Use according to either of the preceding claims, wherein ingredient A consists to an extent of at least 50% by weight, based on the total weight of ingredient A, of golden flaxseed flour.

4. Use according to any of the preceding claims, wherein ingredient A has a fat content of less than 25% by weight and a mucilage polysaccharide content of more than 25% by weight.

5. Use according to any of the preceding claims, wherein ingredient B is selected from almond flour, coconut flour, dark flax flour, pumpkin seed flour, sesame flour, poppy seed flour, walnut flour, pecan nut flour, hazelnut flour, macadamia nut flour, pistachio flour, Brazil nut flour, grape seed flour, peanut flour, cashew nut flour, pomegranate seed flour, raspberry seed flour, hemp flour, rapeseed flour, blackberry seed flour, avocado seed flour, pili nut flour, chestnut flour, pine nut flour, apricot kernel flour, tiger nut flour, camelina flour, mango seed flour, sunflower flour, and mixtures thereof, and mixtures containing up to 50% by weight, based on ingredient B, of one or more of the following flours: quinoa flour, amaranth flour, buckwheat flour, teff or millet.

6. Use according to Claim 5, wherein ingredient B consists to an extent of at least 50% by weight, based on the total weight of component B, of at least one of the following flours: almond flour, coconut flour, hazelnut flour, walnut flour, pecan nut flour, macadamia nut flour and sunflower flour.

7. Use according to any of the preceding claims, wherein ingredient B consists to an extent of at least 50% by weight, based on the total weight of component B, of one or more flours with a fat content of at most 30% by weight, based on the dry mass of the flour.

8. Use according to any of the preceding claims, wherein the weight ratio of ingredient A to ingredient B in the flour composition is in the range from 1 : 9 to 9 : 1.

9. Use according to any of the preceding claims, wherein ingredient C is selected from whole or coarsely chopped nuts, soya flakes, dried fruit pieces, dried vegetable pieces, coarsely chopped chocolate, coarsely chopped baked goods, whole or coarsely chopped peanuts, and whole or coarsely chopped seeds of non-legume oilseeds.

10. Use according to any of the preceding claims, wherein the combination of ingredients A and B of the flour composition as such has a swelling index, determined in accordance with PhEur at 22°C, in the range from 3 to 30 ml/g.

11. Use according to any of the preceding claims, wherein the combination of ingredients A, B and C is selected such that the flour composition does not contain more than 35% by weight of fat, based on the total weight of the flour composition.

12. Use according to any of the preceding claims, wherein the combination of ingredients A, B and C is selected such that the flour composition does not contain more than 20% by weight of utilizable carbohydrates, based on the total weight of the flour composition.

13. Process for producing a ready-to-eat foodstuff porridge, comprising the incorporation of a flour composition which has a gluten content of at most 0.1% by weight and consists to an extent of at least 80% by weight, based on the total weight of the flour composition, of the following ingredients A, B and optionally C, wherein the total amount of ingredients A and B amounts to at least 50% by weight, based on the total weight of the composition:
a. at least one flour or meal ingredient A, selected from golden flaxseed flour, golden flaxseed meal, chia seed flour, chia seed meal, with the proviso that the flour or meal ingredient A consists of at least 30% by weight, in particular at least 50% by weight, of ingredient A of flour or meal from golden flax or chia with an oil content of less than 20% by weight;
b. at least one flour as ingredient B, which is selected from flours from nuts, flours of an oilseed of non-legumes that is different from golden flax and chia, flours from pseudograins and flours made from seeds of gluten-free grasses, wherein ingredient B has a gluten content of at most 0.1% by weight;
c. optionally one or more coarse foodstuff ingredients as ingredient C, which have a gluten content of at most 0.1% by weight;
into water or into a water-containing drink.

14. Process according to Claim 13, wherein the composition is incorporated in an amount from 10 to 150 g per kg of water or water-containing drink.

15. Ready-to-eat foodstuff porridge, obtainable by a process according to Claim 13 or 14, containing
a flour composition which has a gluten content of at most 0.1% by weight and consists to an extent of at least 80% by weight, based on the total weight of the flour composition, of the following ingredients A, B and optionally C, wherein the total amount of ingredients A and B amounts to at least 50% by weight, based on the total weight of the composition:
a. at least one flour or meal ingredient A, selected from golden flaxseed flour, golden flaxseed meal, chia seed flour, chia seed meal, with the proviso that the flour or meal ingredient A consists of at least 30% by weight, in particular at least 50% by weight, of ingredient A of flour or meal from golden flax or chia with an oil content of less than 20% by weight;
b. at least one flour as ingredient B, which is selected from flours from nuts, flours of an oilseed of non-legumes that is different from golden flax and chia, flours from pseudograins and flours made from seeds of gluten-free grasses, wherein ingredient B has a gluten content of at most 0.1% by weight;
c. optionally one or more coarse foodstuff ingredients as ingredient C, which have a gluten content of at most 0.1% by weight;
and water or a water-containing drink,
wherein the amount of flour composition and water is selected such that the total amount of ingredients A and B is in the range from 10 to 150 g per kg of water or water-containing drink.

16. Use of a foodstuff porridge according to Claim 15 for human nutrition.

## Revendications

1. Utilisation d'une composition de farines pauvre en gluten convenant à des aliments, ayant une teneur en gluten au maximum de 0,1 % en poids, qui à raison d'au moins 80 % en poids par rapport au poids total de la composition de farines est constituée des constituants A, B et éventuellement C ci-après, la quantité totale des constituants A et B étant d'au moins 50 % en poids par rapport au poids total de la composition :
a. au moins un constituant farine ou gruau A, choisi parmi la farine de graines de lin doré, le gruau de graines de lin doré, la farine de graines de chia, le gruau de graines de chia, à la condition que le constituant farine ou gruau A soit, à raison d'au moins 30 % en poids, en particulier d'au moins 50 % en poids du constituant A, constitué de farine ou de graines de lin doré ou de chia ayant une teneur en huile inférieure à 20 % en poids ;
b. au moins une farine en tant que constituant B, qui est choisie parmi les farines de fruits à coque, les farines d'une graine oléagineuse différente du lin et du chia de non-légumineuses, les farines de pseudo-céréales et les farines de graines de poacées sans gluten, le constituant B ayant une teneur en gluten au maximum de 0,1 % en poids ;
c. éventuellement un ou plusieurs constituants d'aliments grossiers, en tant que constituant C, qui ont une teneur en gluten au maximum de 0,1 % en poids ;
pour la fabrication de pâtes alimentaires prêtes à consommer.

2. Utilisation selon la revendication 1, le constituant A étant constitué à raison d'au moins 30 % en poids, par rapport au poids total du constituant A, en particulier à raison d'au moins 50 % en poids, par rapport au poids total du constituant A, du tourteau obtenu lors de la fabrication d'huile de chia à partir de graines de chia ou du tourteau obtenu lors de la fabrication d'huile de lin à partir de graines de lin doré, ou d'un mélange de ceux-ci.

3. Utilisation selon l'une des revendications précédentes, le constituant A étant constitué à raison d'au moins 50 % en poids, par rapport au poids total du constituant A, de farine de graines de lin doré.

4. Utilisation selon l'une des revendications précédentes, le constituant A ayant une teneur en lipides inférieure à 25 % en poids et une teneur en polysaccharides muqueux supérieure à 25 % en poids.

5. Utilisation selon l'une des revendications précédentes, le constituant B étant choisi parmi la farine d'amande, la farine de coco, la farine de lin brun, la farine de graines de courge, la farine de sésame, la farine de pavot, la farine de noix, la farine de noix de pécan, la farine de noisette, la farine de noix de macadamia, la farine de pistache, la farine de noix du Brésil, la farine de pépins de raisin, la farine de cacahuète, la farine de noix de cajou, la farine de pépins de grenade, la farine de pépins de fraise, la farine de chanvre, la farine de colza, la farine de pépins de mûre, la farine de noyaux d'avocat, la farine de noix de pili, la farine de châtaigne, la farine de graines de pin, la farine de noyaux d'abricot, la farine de souchet, la farine de cameline, la farine de noyaux de mangue, la farine de tournesol et les mélanges de celles-ci ainsi que les mélanges qui contiennent jusqu'à 50 % en poids, par rapport au constituant B, d'une ou plusieurs des farines suivantes : farine de quinoa, farine d'amarante, farine de sarrasin, teff ou millet.

6. Utilisation selon la revendication 5, le constituant B étant constitué à raison d'au moins 50 % en poids, par rapport au poids total du composant B, d'au moins l'une des farines suivantes : farine d'amande, farine de coco, farine de noisette, farine de noix, farine de noix de pécan, farine de noix de macadamia et farine de tournesol.

7. Utilisation selon l'une des revendications précédentes, le constituant B étant constitué à raison d'au moins 50 % en poids, par rapport au poids total du composant B d'une ou plusieurs farines ayant une teneur en lipides au maximum de 30 % en poids, par rapport à la masse sèche de la farine.

8. Utilisation selon l'une des revendications précédentes, le rapport en poids du constituant A au constituant B dans la composition de farines étant compris dans la plage de 1:9 à 9:1.

9. Utilisation selon l'une des revendications précédentes, le constituant C étant choisi parmi les fruits à coques entiers ou grossièrement concassés, les flocons de soja, les morceaux de fruits séchés, les morceaux de légumes séchées, le chocolat grossièrement concassé, les pâtisseries grossièrement concassées, les arachides entières ou grossièrement concassées, ou les graines entières ou grossièrement concassées de graines oléagineuses non-légumineuses.

10. Utilisation selon l'une des revendications précédentes, la combinaison des constituants A et B de la composition de farines présentant en tant que telle un indice de gonflement, déterminé selon PhEur à 22 °C, dans la plage de 3 à 30 ml/g.

11. Utilisation selon l'une des revendications précédentes, la combinaison des constituants A, B et C étant choisie de façon que la composition de farines ne contienne pas plus de 35 % en poids de lipides par rapport au poids total de la composition de farines.

12. Utilisation selon l'une des revendications précédentes, la combinaison des constituants A, B et C étant choisie de façon que la composition de farines ne contienne pas plus de 20 % en poids de glucides assimilables, par rapport au poids total de la composition de farines.

13. Procédé de fabrication d'une pâte alimentaire prête à consommer, comprenant l'introduction dans de l'eau ou dans une boisson contenant de l'eau d'une composition de farines ayant une teneur en gluten au maximum de 0,1 % en poids, qui est constituée à raison d'au moins 80 % en poids par rapport au poids total de la composition de farines des constituants A et B et éventuellement C ci-après, la quantité totale des constituants A et B étant d'au moins 50 % en poids par rapport au poids total de la composition :
a. au moins un constituant farine ou gruau A, choisi parmi la farine de graines de lin doré, le gruau de graines de lin doré, la farine de graines de chia, le gruau de graines de chia, à la condition que le constituant farine ou gruau A soit, à raison d'au moins 30 % en poids, en particulier d'au moins 50 % en poids du constituant A, constitué de farine ou de graines de lin doré ou de chia ayant une teneur en huile inférieure à 20 % en poids ;
b. au moins une farine en tant que constituant B, qui est choisie parmi les farines de fruits à coque, les farines d'une graine oléagineuse différente du lin et du chia de non-légumineuses, les farines de pseudo-céréales et les farines de graines de poacées sans gluten, le constituant B ayant une teneur en gluten au maximum de 0,1 % en poids ;
c. éventuellement un ou plusieurs constituants d'aliments grossiers, en tant que constituant C, qui ont une teneur en gluten au maximum de 0,1 % en poids.

14. Procédé selon la revendication 13, dans lequel on introduit la composition en une quantité de 10 à 150 g par kg d'eau ou de boisson contenant de l'eau.

15. Pâtes alimentaires prêtes à consommer, pouvant être obtenues par un procédé selon la revendication 13 ou 14, contenant
une composition de farines ayant une teneur en gluten au maximum de 0,1 % en poids, qui est constituée d'à raison d'au moins 80 % en poids, par rapport au poids total de la composition de farines, des constituants A, B et éventuellement C ci-après, la quantité totale des constituants A et B étant d'au moins 50 % en poids, par rapport au poids total de la composition :
a. au moins un constituant farine ou gruau A, choisi parmi la farine de graines de lin doré, le gruau de graines de lin doré, la farine de graines de chia, le gruau de graines de chia, à la condition que le constituant farine ou gruau A soit, à raison d'au moins 30 % en poids, en particulier d'au moins 50 % en poids du constituant A, constitué de farine ou de graines de lin doré ou de chia ayant une teneur en huile inférieure à 20 % en poids ;
b. au moins une farine en tant que constituant B, qui est choisie parmi les farines de fruits à coque, les farines d'une graine oléagineuse différente du lin et du chia de non-légumineuses, les farines de pseudo-céréales et les farines de graines de poacées sans gluten, le constituant B ayant une teneur en gluten au maximum de 0,1 % en poids ;
c. éventuellement un ou plusieurs constituants d'aliments grossiers, en tant que constituant C, qui ont une teneur en gluten au maximum de 0,1 % en poids ;
et de l'eau et une boisson contenant de l'eau,
la quantité de la composition de farines et de l'eau étant choisie de façon que la quantité totale des constituants A et B soit comprise dans la plage de 10 à 150 g par kg d'eau ou de boisson contenant de l'eau.

16. Utilisation de pâtes alimentaires selon la revendication 15 pour l'alimentation humaine.
